# EUROPEAN PATENT APPLICATION

(11) **EP 4 672 640 A1**
(43) Date of publication of application: **31.12.2025**
(21) Application number: 25185047.5
(22) Date of filing: 24.06.2025
(51) Int. Cl.: H04B 15/02, H04W 52/02

(54) **METHODS AND ARRANGEMENTS TO MANAGE PLATFORM INTERFERENCE**

(30) Priority: 28.06.2024 US 202418758067
(71) Applicant: INTEL Corporation, Santa Clara, CA 95054 (US)
(72) Inventor: AZIZI, Shahrnaz, Cupertino, 95014 (US); GUY, Wey-Yi, Beaverton, 97007 (US); RADJAI, Amir Ali, Portland, 97225 (US); RESHEF, Ehud, 3608249 KIRYAT TIVON (IL); DAI, Jianwei, PORTLAND, 97229 (US); OUZIELI, Ido, 6382732 Tel Aviv TA (IL); FOROUGHIAN, Farnaz, Hillsboro, 97123 (US); YEPES, Ana, Portland, 97225 (US)
(74) Representative: 2SPL Patentanwälte PartG mbB

(57) **Abstract**

Logic to communicate an unprotect signal to a platform controller, the unprotect signal to indicate a first time frame during which protection of wireless communications from internal interference received at an antenna is not requested. The internal interference to comprise electromagnetic radiation emanating from a platform device based on operations by the platform device at a clock frequency. The protection to involve adjustment, by the platform controller of a clock frequency for the operations.

## Description

### BACKGROUND

The increase in interest in network and Internet connectivity drives design and production of new processing platforms with wireless communications capabilities. The escalating numbers of processing platforms active as well as the bandwidth demands of the users of such devices are increasing performance requirements for wireless communications as well as other platform components (devices) within the processing platforms.

Accordingly, the Institute of Electrical and Electronics Engineers (IEEE) is developing one or more new standards that utilize Orthogonal Frequency-Division Multiple Access (OFDMA) for channel allocation to increase bandwidth and data throughput capabilities of the processing platforms, to meet demands from users. The increase in the number of channels and bandwidths accessible concurrently by processing platforms in conjunction with the increased performance requirements for other platform components within the processing platforms, increases interference internal to the processing platforms, which translates into interference on wireless communications that can degrade performance of wireless systems.

### BRIEF DESCRIPTION OF THE DRAWINGS

FIG. 1A depicts a system diagram illustrating an embodiment of a network environment for interference logic circuitry, in accordance with one or more example embodiments.
FIG. 1B depicts an embodiment illustrating interactions between stations (STAs) to establish multiple links between an access point (AP) multi-link device (MLD) and a non-AP MLD.
FIG. 1C depicts an embodiment of a system including processing platforms with MLDs.
FIG. 1D illustrates an embodiment of a radio architecture for STAs, such as the wireless interfaces for STAs depicted in FIGs. 1A-C, to implement interference logic circuitry.
FIG. 1E illustrates an embodiment of front-end module (FEM) circuitry of a wireless interface for STAs, such as the STAs in FIGs. 1A-C, to implement interference logic circuitry.
FIG. 1F illustrates an embodiment of radio integrated circuit (IC) circuitry of a wireless interface for STAs, such as the STAs in FIGs. 1A-C, to implement interference logic circuitry.
FIG. 1G illustrates an embodiment of baseband processing circuitry of a wireless interface for STAs, such as the STAs in FIGs. 1A-C, to implement interference logic circuitry.
FIG. 1H illustrates an embodiment of a processing platform with communications between baseband processing circuitry of a wireless communications interface and a platform controller for processing platforms, such as the processing platforms, user devices, STAs and MLDs in FIGs. 1A-C, to implement interference logic circuitry.
FIG. 1I illustrates an embodiment to measure run-time internal interference of a platform on wireless communications channels for processing platforms, such as the processing platforms, user devices, STAs and MLDs in FIGs. 1A-C, to implement interference logic circuitry.
FIG. 1J illustrates an embodiment to measure offline measurement of internal interference of a platform on wireless communications channels for processing platforms, such as the processing platforms, user devices, STAs and MLDs in FIGs. 1A-C, to implement interference logic circuitry.
FIG. 2A depicts an embodiment of transmissions between four stations and an AP.
FIG. 2B depicts an embodiment of a transmission between one station and an AP.
FIG. 2C depicts an embodiment of a resource units.
FIG. 2D depicts an embodiment of a multiple user (MU) physical layer (PHY) protocol data unit (PPDU).
FIG. 2E depicts another embodiment of a MU PPDU comprising a data field for a MAC management frame such as the management frame shown in FIG. 2F.
FIG. 2F depicts an embodiment of a physical layer service data unit (PDSU) comprising a MAC management frame such as shown in FIGs. 2G-I.
FIG. 2G depicts an embodiment of frame body elements for a protect request signal frame.
FIG. 2H depicts an embodiment of a frame body an unprotect signal frame.
FIG. 2I depicts an embodiment of a physical protocol data unit of a management frame such as the management frame shown in FIG. 2F.
FIG. 2J depicts an embodiment of a management frame such as the management frame shown in FIG. 2F such as the management frames shown in FIGs. 2F-2I.
FIG. 3 depicts an embodiment of a wireless communications interface with interference logic circuitry such as the wireless communications interface shown in FIG. 1C.
FIG. 4A depicts an embodiment of a flowchart to implement interference logic circuitry such as the interference logic circuitry discussed in conjunction with FIGs. 1-3.
FIG. 4B depicts another embodiment of a flowchart to implement interference logic circuitry such as the interference logic circuitry discussed in conjunction with FIGs. 1-3.
FIGs. 4C-D depict embodiments of flowcharts to generate and transmit frames and receive and interpret frames for communications between wireless communication devices.
FIG. 5 depicts an embodiment of a functional diagram of a wireless communication device, in accordance with one or more example embodiments of the present disclosure.
FIG. 6 depicts an embodiment of a block diagram of a machine upon which any of one or more techniques may be performed, in accordance with one or more embodiments.
FIGs. 7-8 depict embodiments of a computer-readable storage medium and a computing platform to implement interference logic circuitry.

### DETAILED DESCRIPTION OF EMBODIMENTS

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Processing platforms have platform components (or devices), internal to the platform, which perform operations that can be the sources of interference in wireless communications. Each platform device may operate at a clock frequency to synchronize operations about the platform. If a platform device operates at or near a clock frequency that is at a carrier frequency of a wireless channel such as 2.4 gigahertz (GHz), 5 GHz, 6 GHz, and/or the like, or has a harmonic frequency that is at or near a carrier frequency of a wireless channel, the platform device may generate electromagnetic radiation that is received by one or more antennas of the wireless communications device of the platform as interference. For instance, if a platform device operates at a clock frequency of 2.4 GHz, 5 GHz, or 6 GHz, such as some memory devices, the platform device may generate electromagnetic energy that can be captured or received by an antenna of the wireless communications device. Similarly, if a platform device operates at a clock frequency of 3.2 GHz, a harmonic frequency of 3.2 GHz is 6.4 GHz, so the platform device may cause interference received by antennas on or near a 6 GHz wireless channel.

Note that a processing platform, as discussed herein, may comprise any device or product that includes a wireless communications device such as a Wi-Fi communications device, a Bluetooth communications device, and/or the like. For instance, a processing platform may comprise a smart phone, a cellular phone, a tablet, a laptop or notebook computer, a workstation, a server, a router, a network switch, a home appliance (refrigerator, oven, stove, washer, dryer, television, etc.), a smoke/carbon monoxide detector, a light switch, a power outlet, and/or the like.

Processing platforms may include some components and/or functionality to protect wireless communications from interference caused by platform devices (referred to herein as internal interference). For instance, many processing platforms may include components to shield or block electromagnetic radiation from interfering with antennas of the processing platforms such as copper tape. Some processing platforms may include functionality built into a platform controller that can protect wireless communications from interference from internal platform devices or externally connected platform devices (such as a universal serial bus (USB) drive) by adjusting the clock frequencies of the platform devices to clock frequencies that are not at or near a carrier frequency or harmonic of a carrier frequency of wireless communications.

Adjusting clock frequencies of platform devices may not be consistent with optimizing performance of the processing platform. For instance, lowering a clock frequency of a memory device may lower data access speed, which may negatively affect (or degrade) an overall performance of the processing platform. Increasing a clock frequency of a memory device may affect thermal budgets and power budgets for platform device, which can negatively impact the overall performance of the processing platform.

In many processing platforms, the platform controller may comprise one or more physical devices that operate to manage power budgets, thermal budgets, and clock frequencies of various platform devices to meet performance requirements of the processing platforms. The platform controller may, for instance, balance a power budget and/or a thermal budget with clock frequencies to optimize performance of all or many aspects of the processing platforms. In some embodiments, the platform controller may comprise a set of one or more different controllers to perform this functionality.

Platform devices may produce wideband or narrow band interference for wireless communications and the amplitude of the interference may relate to the activity level or workload of the platform device. For instance, one of the common sources of platform wideband interference is the clock frequency of double-data rate (DDR) and low power DDR (LPDDR) memories. Embodiments herein are not limited to any particular source of internal interference but are applicable to all sources of interference generated by other platform operations such as high-speed input/output (I/O), clocking of a display, a camera, USB devices within or attached to the platform, and/or the like. Furthermore, wireless communication devices within the platform such as a Bluetooth^{®} device, a cellular device, or a Wi-Fi device may interfere with each other. In some embodiments, the Bluetooth^{®} device and the Wi-Fi device may be integrated to coordinate communications to attenuate interference. In other embodiments, the Bluetooth^{®} device and the Wi-Fi device may be distinct platform devices.

Since the interference related to electromagnetic radiation, which dissipates with distance, the configuration of the platform, i.e., the proximity of platform devices, buses, interconnects, and/or the like, to the one or more antennas used for wireless communications may affect the amplitude and bandwidth of the interference caused in the wireless communications. Even platform components on the same die or within the same chip package may produce electromagnetic radiation that causes interference with each other.

The number of and types of wireless communication devices within the same processing platform impacts the potential interference caused in wireless communication channels. Newer versions of Wi-Fi such as Wi-Fi 7 and later have introduced multi-link (ML) devices (MLDs) that include more than one Wi-Fi devices (referred to as stations (STAs)) in a processing platform. MLDs add station management of multi-link operations (MLOs) via a multiple medium access sublayer station management entity (MM-SME) to offer enhanced functionality through centralized management of operations across multiple links of multiple STAs of the MLD at one or more different carrier frequencies such as 2.4 gigahertz (GHz), 5 GHz, and 6 GHz. For instance, Wi-Fi 7 introduced different modes of operation including Enhanced Multi-Link Single Radio (EMLSR) and Tri-band Dual Concurrency (TBDC) (or Wi-Fi 7 Simultaneous Transmit and receive (STR)). EMLSR allows devices to listen concurrently to two or more links in different frequency bands (e.g., 2.5 GHz, 5 GHz, 6 GHz), which makes more efficient use of available spectrum and allows for improved reliability with low and precise latencies. With EMLSR, devices may initially listen to links simultaneously by splitting multiple antennas with one or two spatial streams in each link, and upon proper triggering, aggregate multiple links into a single MIMO radio. With EMLSR STR (or TBDC), devices may transmit and receive on a pair of links simultaneously given sufficient frequency separation between channels of the pair of links to avoid intra-device interference and/or sophisticated self-interference cancelation capabilities.

Contemporary solutions may involve a Wi-Fi device signaling a platform controller via, e.g., printed circuits and connectors internal to the processing platform, to indicate interference on one or more Wi-Fi channels. The platform controller may respond by changing the clock frequency of memory accesses to avoid the interference to Wi-Fi communications. For example, the clock frequency of memory accesses to DDR and/or LPDDR memory may cause interference to one or more channels of Wi-Fi communications. So processing platforms may implement Dynamic Voltage Frequency Scaling (DVFS) point to select a memory speed that will not interfere on Wi-Fi channel. Adding a DVFS point requires new memory training sequences, which in turn requires hardware space to store the new memory training sequences. The DVFS point must be tested, validated, and tuned for each processing platform model. The memory training happens during boot-time, which may increase the boot time for the processing platform models. Moreover, the change of DVFS point comes with a cost to memory performance. In the absence of Wi-Fi operation, the platform controller may select the memory clock frequency based on the complex platform performance tuning algorithm that for a given power, thermal and acoustic budget, the speed of the memory is optimized.

When Wi-Fi module requests a change of DVFS point to avoid interference, it forces the processing platform to skip a clock frequency, to go one step higher in frequency or one step lower even if not optimal for the best power and performance of the processing platform. If the processing platform drops the frequency to a lower frequency while an application with high memory bandwidth demand is running, then system performance of the processing platform decreases due to the drop in memory bandwidth, and it takes longer to finish a task for the end user. Also, this can increase the power consumption by the processing platform because different components need to stay powered up for a longer time to finish the execution. On the other hand, if the memory frequency is forced to go one step higher, then the power consumption increases because the higher the frequency, a higher voltage is needed, and also the higher toggling of clock consumes more power. This in turn may impact the overall battery life or reduce the overall system performance in a power constrained system. Therefore, operating on an optimal point is important for the end user experience.

In some scenarios, although not often, to meet the workload demands, the battery life target and the thermal restrictions, the platform controller may ignore Wi-Fi's request of changing the DVFS point, and hence the interference remains on Wi-Fi channel, sometimes triggering catastrophic cases. Consider an example scenario when a use case renders a video on Wi-Fi channel and must process the video in real time to then upload it to a sever using Wi-Fi again. In this scenario, the laptop is not plugged into a power outlet and consumes battery power. The complex platform tuning algorithm of the platform controller decides to continue operating on the selected DVFS point (which interferes with at least one of the Wi-Fi links) to meet performance demand and power budget. The interference on Wi-Fi channel would degrade download/upload performance impacting the end user experience of observing a choppy video. On the other hand, if the platform controller were to honor Wi-Fi request to step the memory frequency down, the degraded memory performance would again add latency to the end user application. If the platform controller were to honor Wi-Fi request, but increases the memory frequency, the battery would drain quickly to the total disappointment of the end user, or the platform would become over heated.

Embodiments may comprise interference logic circuitry to manage interference on links or communication channels of wireless communication devices such as STAs, MLDs, or Bluetooth^{®} devices by signaling protect request signals with a limited time period and/or unprotect signals to indicate that protection is not requested. Signaling and signals, as discussed herein, refer to communications internal to the processing platform via platform wiring (such as printed circuits), buses, wires, connectors, integrated circuits, discrete circuit components (such as resistors, capacitors, inductors, and/or the like), a combination thereof, and/or the like. The protect request signal may request protection of the wireless channels from interference while the wireless communications device is performing communications on one or more channels, while the wireless communications device is not in a power save mode (PS mode), and, in some embodiments, after a determination by the wireless communications device that the magnitude of the internal interference on one or more channels meets or exceeds one or more interference thresholds such as an amplitude threshold and a bandwidth threshold. In some embodiments, the protect request signal may include one or more fields with values from a group of values including an indication of the time frame of communications to be protected, an indication of whether the request is for a one-time protection or periodic protection, an indication of the carrier frequency of the communication affected by the interference, an indication of the channel(s) affected by the interference, an indication of the channel bandwidth of the communication, an indication of an amplitude of the interference, an indication of the bandwidth of the interference, run-time interference data measured by the wireless communication device, and/or the like.

The unprotect signal may indicate, for instance, that the wireless communications device is not requesting protection during a time frame and may indicate that the request is periodic or a one-time request. For instance, the wireless communications device may enter a power save mode (PS mode) for 60 milliseconds of every 100 milliseconds so the unprotect signal may include fields with values for, e.g., a time frame, a periodicity/duty cycle, a start time, and/or the like.

Based on protect request signals and/or unprotect request signals, the platform controller may determine periods of time during which the wireless communications device is requesting protection and/or periods of time during which the wireless communications device is not requesting protection. During the periods of time that the wireless communications device is not requesting protection, the platform controller may, advantageously, optimize platform operations based on a power budget, thermal or acoustic budget, and clock frequencies without consideration of protecting the wireless communications device from internal interference.

During periods of time that the wireless communications device is requesting protection from internal interference, the platform controller may determine optimization of platform operations with modifications of one or more clock frequencies to remove or attenuate internal interference on frequencies or channels indicated by the protection request signal. For instance, the platform controller may change to the clock frequency of one or more memory devices, one or more cameras, one or more displays, and/or one or more other devices that cause interference in one or more wireless channels of the wireless communications. In some embodiments, the wireless communications device, such as a baseband processor, may communicate a protect request signal or an unprotect signal to a platform controller of, e.g., a STA or a MLD and, during time frames for which the wireless communications device does not request protection, the platform controller may have a full degree of freedom to select an optimized DVFS point for memory devices, cameras, displays, Bluetooth^{®} devices, and/or other devices.

In some embodiments, the interference logic circuitry of the wireless communications device may align the request for change of DVFS point with a PS mode, which advantageously improves end-users' experience by allowing platform controller to select an optimized DVFS point given performance, power, thermal and acoustic budgets during the periods that the wireless communications device is known to be in PS modes. Even though a selected e.g., memory speed can potentially generate interference to the Wi-Fi channel, the platform controller would know the wireless communications device is not listening to any frame during PS mode. In some embodiments, the interference logic circuitry of the wireless communications device may align protection with durations of time that the wireless communications device in known to operate at lower modulation and coding scheme or during the time that the wireless communications device operates only on a 20 megahertz (MHz) control channel out of the wider bandwidth of operation where the control channel is not impacted by the internal interference from the platform devices. Such embodiments may advantageously (1) improve end user experience, (2) improve power, thermal and performance optimization, and (3) improve wireless performance.

The interference discussed herein that is from a source internal to a processing platform is referred to as internal interference because the interference is based on electromagnetic energy produced in conjunction with wired or wireless communications by other platform devices internal to the processing platform such as a STA, an MLD, or a Bluetooth^{®} device. Internal interference characteristics or patterns are platform specific because they may be associated with the platform size, design, number of PCB layers, where wireless module and antenna are located on the platform; how the cables are routed from antennas to the wireless communications device; where memory elements are located; where the wireless communications device, display, camera, and/or the like is located; and how the fabrics and interconnects are routed in printed circuit board (PCB) layers and their proximities to antennas/cables, etc.; the clock frequencies associated with operation of the other platform devices; the location(s) and/or effectiveness of shielding to prevent or attenuate the interference; and/or the like.

Furthermore, the characteristics or patterns of internal interference to a wireless communications channel may be different depending on the workload of the other platform devices (sources of interference). Hence, as a first step, many embodiments may store or maintain internal interference characteristics or patterns in memory such as a nonvolatile memory. In some embodiments, interference logic circuitry executing on the processing platform may characterize and store in memory, run-time interference estimations associated with one or more different workloads.

In many embodiments, the interference logic circuitry may have access to characterizations or patterns of interference caused in wireless communication channels via offline interference measurements and/or run-time interference measurements. With respect to offline characterization of internal interference, a manufacture of a processing platform with one or more wireless communications devices may perform measurements of the interference with a diagnostic tool, a spectrum analyzer, and/or other equipment. In some embodiments, the platform-specific interference data or internal interference patterns may be stored on a processing platform for access during run-time. In other embodiments, internal interference data or patterns may be accessible via a web site.

In some embodiments, the interference logic circuitry may measure radio frequency (RF) interference between packets during run-time to estimate internal interference data or patterns. In some embodiments, the interference logic circuitry may combine the offline and run-time interference data with statistics/indicators from other platform devices of the processing platform such as the DDR on memory load, high-speed input/output (IO), high speed interconnects, and/or the like, to identify and characterize run-time interference characteristics or patterns.

In some embodiments, the interference logic circuitry of a wireless communications device may evaluate the strength and location of the potential interference against a wireless operating channel. Then, the interference logic circuitry may identify which parts of the channel are susceptible to performance degradation because of the internal interference. Based on these determinations and/or identification of interference patterns from interference data provided to the processing platform for offline measurements, the interference logic circuitry of the wireless communications device may determine interference patterns for which to request protection. The interference logic circuitry of the wireless communications device may determine one or more threshold levels of internal interference for which to request protection. The interference logic circuitry of the wireless communications device may determine the wireless communication channels affected by the internal interference based on the interference data provided to the processing platform. Thereafter, the interference logic circuitry of the wireless communications device may signal a protect request for a limited time frame to the platform controller to protect wireless communications on the wireless communication channel(s) from the internal interference. For example, when the memory accesses are at a 40 percent workload, the accesses to a memory may cause interference but the interference pattern (amplitude and bandwidth) may not present a significant impediment to wireless communications on a channel. However, when the memory accesses are at a 60 percent workload or greater for that memory, the internal interference may cross one or more thresholds with an interference pattern that does present a significant impediment to the wireless communications on certain wireless communication channels.

In some embodiments, memory accessible by the interference logic circuitry of the wireless communications device may have predetermined thresholds and/or predetermined interference patterns. In some embodiments, the interference logic circuitry of the wireless communications device may determine and/or update the determined or predetermined thresholds via one or more predetermined algorithms based on signal metrics of run-time measurements such as a bit error rate (BER), retransmission rate, signal to noise ratio (SNR), signal to interference plus noise ratio (SINR), signal to interference ratio (SIR), packet loss, received signal strength indicator (RSSI), reference signal received power (RSRP), reference signal received quality (RSRQ), combinations thereof, and/or the like.

In some embodiments, the interference logic circuitry of the wireless communications device may take some measurements of one or more channels prior to communications on the one or more channels. If the measurements/calculations of interference metrics meet or exceed one or more thresholds of interference on the one or more channels, e interference logic circuitry of the wireless communications device may communicate a protect request signal to the platform controller.. In some embodiments, the interference logic circuitry of the wireless communications device may request protection with a communication or message that indicates the carrier frequency, and the platform controller may include interference logic circuitry to determine the processes by other platform devices that may cause interference on the wireless communication carrier frequency. In other embodiments, the interference logic circuitry of the wireless communications device may request protection with indications of specific channels and/or a bandwidth on a carrier frequency and the platform controller may implement interference logic circuitry to determine the processes by other platform devices internal to the processing platform that may cause interference on the wireless communication channels and/or a bandwidth. In some embodiments, interference logic circuitry of the wireless communications device may request periodic or aperiodic protections of one or more wireless communications channels in one or more different protect request signals communicated to the platform controller. In many embodiments, the interference logic circuitry of the wireless communications device may indicate one or more time frames in the protect request signals that may be specific time frames, or may indicate a periodicity and/or an aperiodic pattern.

In some embodiments, the interference logic circuitry of the wireless communications device may define operations for which to request protection and operations for which to not request protection. For instance, the wireless communications device may scan one or more channels used for wireless communications with, e.g., remote devices such as access points or peer-to-peer devices, to assess connections or links with the access point (AP) or peer-to-peer devices. In some "emergency" situations, the wireless communications device may scan for remotes devices after a loss of a connection with a currently associated remote AP or peer-to-peer device. In such embodiments, the interference logic circuitry of the wireless communications device may request protection by the platform controller from internal interferences on carrier frequencies and/or channels on which the wireless communications device may perform active or passive scans for new connections.

In some situations, the wireless communications device may scan for remotes devices with quick, energy-based assessments of traffic on channels to determine which channels may have active communications. In such situations, the interference logic circuitry of the wireless communications device may not request protection by the platform controller from internal interferences. For instance, the interference logic circuitry of the wireless communications device may perform energy-based assessments of many channels for a short time frame such as 5 milliseconds to generate a list of channels that may have active wireless communications.

In some situations, the wireless communications device may scan for remotes devices as part of a background scan, a roaming scan, or a user-triggered scan to determine which channels may have active communications. In such situations, the interference logic circuitry of the wireless communications device may not request protection by the platform controller from internal interferences. For instance, the interference logic circuitry of the wireless communications device may perform scans of channels to monitor for remote devices that have better connection characteristics than a currently connected remote device. The scans may include active and/or passive scanning techniques. The selection of active or passive scanning techniques may be based on the regulation of the channels and/or regulation of the channels in particular geographical locations. Active scanning may involve transmitting, e.g., probe request frames and receiving, e.g., probe response frames or other frames. Passive scanning may involve energy-based scanning and/or receiving, e.g., beacon frames or other frames that may include information about an access point or peer-to-peer station.

In some embodiments, the interference logic circuitry of the wireless communications device may communicate unprotect signals to indicate to the platform controller that protection is not requested, not requested during indicated time frames, not requested for periodic time frames, not requested during aperiodic time frames, and/or the like. In some embodiments, the interference logic circuitry of the wireless communications device may generate an unprotect signal that includes a value to indicate a time duration, a value to indicate a start time, a value to indicate a periodicity, a value to indicate a priority for the protection, a combination thereof, and/or the like.

To illustrate, the wireless communications device of a processing platform may periodically enter a power save mode at least with respect to communications with a remote device. In such embodiments, the interference logic circuitry of the wireless communications device may communicate one or more unprotect signals to a platform controller for the processing platform via platform wiring to indicate entry into the power save mode and/or one or more protection request signals to indicate termination of or exit from the power save mode. The platform controller may, in response to the signaling, determine how to optimize platform performance during the power save mode in accordance with one or more optimization algorithms that may, for instance, balance power consumption with performance of processes of other platform devices within the processing platform.

The interference logic circuitry of the platform controller may include one or more algorithms to determine how to address the protect request signals and/or unprotect signals from the wireless communications device based on predetermined interference data, characterizations of interference, and/or patterns of interference stored in memory accessible by the interference logic circuitry of the platform controller. Such interference information may include interference data predetermined and stored in non-volatile memory, interference data measured by the interference logic circuitry of a wireless communications device during run-time, a combination thereof, and/or the like.

Many embodiments discussed herein include examples of interference logic circuitry of Wi-Fi wireless communication devices such as STAs and MLDs. However, embodiments are not limited to Wi-Fi wireless communication devices. Embodiments may implement interference logic circuitry in any one or more of or all the wireless communication devices in a processing platform. Interference logic circuitry may also reside in a platform controller to access predetermined offline interference data and/or run-time interference data measured by the one or more wireless communications devices of the processing platform. The interference logic circuitry of the platform controller may account for protect request signals and/or unprotect request signals from one or more different wireless communications devices for optimization of the platform performance. Furthermore, for embodiments in which the platform controller described herein resides in more than one physical devices, the interference logic circuitry may reside in one or more of or all the physical devices of the platform controller.

As referred to herein, links may be established (or logical) communications channels or connections between STAs or MLDs. MLDs include more than one stations (STAs). For instance, an AP MLD and a non-AP MLD may both include STAs configured for multiple frequency bands such as a first STA configured for 2.4 gigahertz (GHz) communications, a second STA configured for 5 GHz communications, and a third STA configured for 6 GHz communications.

Interference logic circuitry may comprise a combination of logic in the form of processing circuitry with hardware-based logic such as state machines and/or discrete logic circuitry, and/or code-based logic in the form of software, firmware, microcode, and/or the like.

In many embodiments discussed herein, MLDs have STAs operating on the same set of carrier frequencies but MLDs are not limited to STAs with any particular set of carrier frequencies. For example, embodiments may comprise MLDs that have a set of STAs operating on one or more overlapping carrier frequencies such as STAs with carrier frequencies in a range of sub 1GHz, 1 GHz to 7.25 GHz, 7.25 GHz to 45 GHz, above 45 GHz, around 60 GHz, and/or the like.

Note that STAs may be AP STAs or non-AP STAs and each may be associated with a specific link of an MLD. Note also that an MLD can include AP functionality in one or more STAs for one or more links and, if a STA of the MLD operates as an AP on a link, the STA is referred to as an AP STA. If the STA does not perform AP functionality, or does not operate as an AP, on a link, the STA is referred to as a non-AP STA. In many of the embodiments herein, the AP MLDs operate as AP STAs on active links, and the non-AP MLDs operate as non-AP STAs on active links. However, an AP MLD may also have STAs that operate as non-AP STAs on the same extended service set (ESS) or basic service set (BSS) or other ESS's or BSS's.

In an infrastructure BSS, the IEEE 802.1X Authenticator MAC address (AA) and the AP STA's MAC address are the same, and the Supplicant's MAC address (SPA) and the non-AP STA's MAC address are the same. Between an AP MLD and a non-AP MLD, in many embodiments, the IEEE 802.1X Authenticator MAC address (AA) may be set to the MLD MAC address of the AP MLD, and the Supplicant's MAC address (SPA) may be set to the MLD MAC address of the non-AP MLD, but embodiments are not limited to such MAC address assignments. Note that the MAC address for a MLD (AP or non-AP) may be the same as a MAC address of one of the STAs of the MLD or may be different from the MAC addresses of all the STAs of the MLD. For instance, if the MLD has three STAs, the MAC address of the MLD may be the same MAC address as, e.g., the first STA of the MLD in some embodiments. In other embodiments, the MAC address of the MLD may be different from all three of the MAC addresses of the STAs of the MLD.

In some embodiments, the MAC address is encoded as 6 octets, taken to represent an unsigned integer. The first octet of the MAC address may be used as the most significant octet. The bit numbering conventions may be used within each octet. In such embodiments, this results in a sequence of 48 bits represented such that bit 0 is the first transmitted bit (Individual/Group bit) and bit 47 is the last transmitted bit. Note that the value of the MAC address included in a field of a MAC frame may comprise the complete MAC address, a compressed or encoded MAC address, a truncated MAC address such as a set of the least significant bits of the MAC address or the last four bits of a MAC address, and/or the like.

Some embodiments may use the same security keys for, e.g., authentication and/or data security, on all APs affiliated to the same AP MLD, even if the APs are not collocated. Some embodiments may implement different security keys for, e.g., authentication and/or data security, such that the same security keys are used within a group of collocated AP STAs and different security keys are used between different groups of collocated AP STAs.

Embodiments may comprise interference logic circuitry to manage and/or mitigate interference on links such as a 2.4 GHz link, a 5 GHz link, or a 6 GHz link, of STAs or MLDs. Note that while many examples of embodiments discussed herein discuss 2.4 GHz link, a 5 GHz link, or a 6 GHz links, links with have any carrier frequency. Some embodiments may advantageously use of 2.4 GHz links, 5 GHz links, or 6 GHz links due to the proliferation of 2.4 GHz link and 5 GHz link devices as well as the current utility and efficiencies related to the implementation of 6 GHz links. Embodiments discussed herein will be advantageous from an operational and efficiency standpoint regardless of the carrier frequencies.

In some embodiments, the AP MLD may include a 6 GHz AP STA that is also a channel enabler for the 6 GHz channel. In such embodiments, the channel enabler may connect via, e.g., the Internet to an automated frequency coordination (AFC) system and operate under the control of the AFC system to prevent harmful interference to microwave links that operate in the band. The AFC system may determine on which frequencies and at what power levels standard-power devices may operate and may, in some embodiments, be aware of the location of the AP MLD. For instance, in some embodiments, standard power devices may be able to operate on 5.925-6.425 GHz and 6.525-6.875 GHz portions of the 6 GHz channel.

Note that a channel enabler may operate on other frequencies such as 2.4 GHz or 5 GHz to offer more control to a network operator even though such frequencies may not require connection to an AFC system or the like.

For maintaining a quality of service (QoS), many embodiments define two or more access categories. Access categories may be associated with traffic to define priorities (in the form of parameter sets) for access to a channel for transmissions (or communications traffic) such as managed link transmissions. Many embodiments implement an enhanced distributed channel access (EDCA) protocol to establish the priorities. In some embodiments, the EDCA protocol includes access categories such as best efforts (AC_BE), background (AC_BK), video (AC_VI), and voice (AC_VO). Protocols for various standards provide default values for parameter sets for each of the access categories and the values may vary depending upon the type of a STA, the operational role of the STA, and/or the like.

Embodiments may also facilitate communications by stations (STAs) in accordance with different versions of Institute of Electrical and Electronics Engineers (IEEE) 802.11 standards for wireless communications (generally referred to as "Wi-Fi") such as IEEE 802.11-2020, December 2020; IEEE P802.11be^{™}/D2.2, October 2022; IEEE P802.11ax-2021^{™}, IEEE P802.11ay-2021^{™}, IEEE P802.11az^{™}/D3.0, IEEE P802.11ba-2021^{™}, IEEE P802.11bb^{™}/D0.4, IEEE P802.11bc^{™}/D1.02, and IEEE P802.11bd^{™}/D1.1.

Various embodiments may be designed to address different technical problems associated with internal interference mitigation such as reducing the time frames during which a platform controller protects one or more carrier frequencies or channels from internal interference; identifying internal interference patterns via offline and/or run-time interference measurements; identifying situations in which to request protection from internal interference by a platform controller; identifying operations during which a wireless communications device should not request protection to protect wireless communications; identifying operations during which a wireless communications device should request protection to protect wireless communications; determination of procedures and signaling to protect and/or unprotect wireless communications; and/or the like.

Different technical problems such as those discussed above may be addressed by one or more different embodiments. Embodiments may address one or more of these problems associated with internal interference mitigation. For instance, some embodiments that address problems associated with internal interference mitigation may do so by one or more different technical means, such as, determining situations to request protection from internal interference; determining signaling to request protection from internal interference; determining situations for which no protection is requested; determining signaling to inform a platform controller that protection is not requested; determining a first time frame of a power save mode, wherein the power save mode is associated with wireless communications with a remote device; communicating an unprotect signal via platform wiring to a platform controller coupled with the wireless communications device, the unprotect signal to indicate the first time frame during which protection from internal interference is not requested; communicating a protect request signal via platform wiring to request protection from internal interference during an emergency-based scan or after detection of an interference pattern associated with internal interference; and/or the like.

In several embodiments, processing platforms may comprise central servers, access points (APs), and/or stations (STAs) such as modems, routers, switches, servers, workstations, netbooks, mobile devices (Laptop, Smart Phone, Tablet, and the like), sensors, meters, controls, instruments, monitors, home or office appliances, Internet of Things (IoT) gear (watches, glasses, headphones, and the like), and the like. Some embodiments may provide, e.g., indoor and/or outdoor "smart" grid and sensor services. In various embodiments, processing platforms may be designed or configured for specific applications such as healthcare, home, commercial office and retail, security, and industrial automation and monitoring applications, as well as vehicle applications (automobiles, self-driving vehicles, airplanes, and the like), and the like.

Some embodiments may facilitate wireless communications in accordance with multiple standards. Some embodiments may comprise low power wireless communications like Bluetooth^{®}, cellular communications, and messaging systems. Furthermore, some wireless embodiments may incorporate a single antenna while other embodiments may employ multiple antennas and/or antenna elements.

While some of the specific embodiments described below will reference the embodiments with specific configurations, those of skill in the art will realize that embodiments of the present disclosure may advantageously be implemented with other configurations with similar issues or problems.

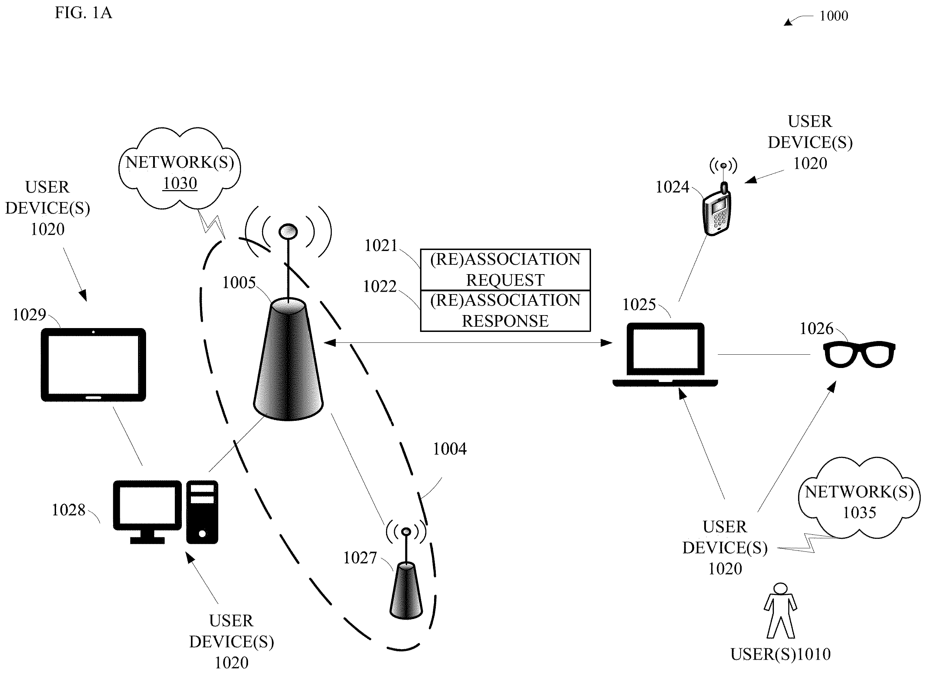

**FIG. 1A** depicts a system diagram illustrating an embodiment of a network environment for interference logic circuitry, in accordance with one or more example embodiments. Wireless network 1000 may comprise processing platforms that include one or more access point (AP) multi-link devices (AP-MLDs) 1005 and 1027, and one or more user devices 1020 (non-AP MLDs), which may communicate in accordance with IEEE 802.11 communication standards.

In the present embodiment, the AP MLD 1005 may comprise a collocated set of AP stations (STAs) and the AP MLD 1027 may comprise a collocated set of AP STAs. Furthermore, the AP MLD 1005 and AP MLD 1027 may be affiliated with the same basic service set (BSS) 1004.

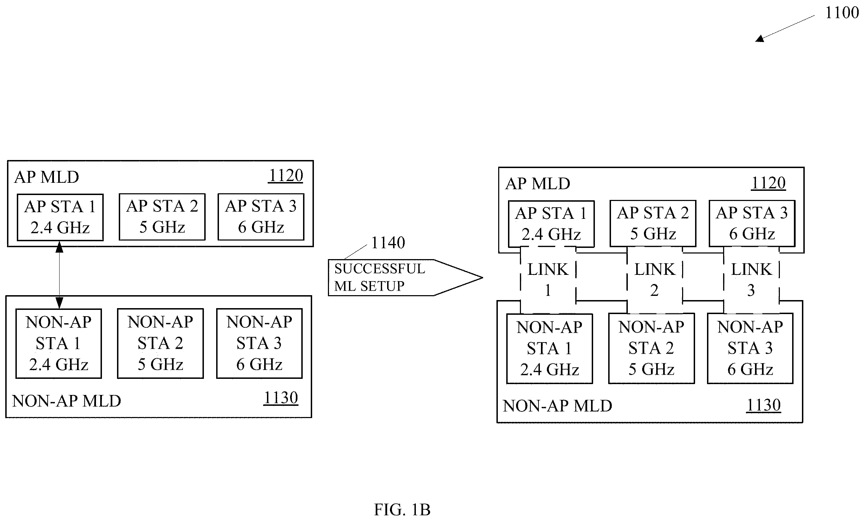

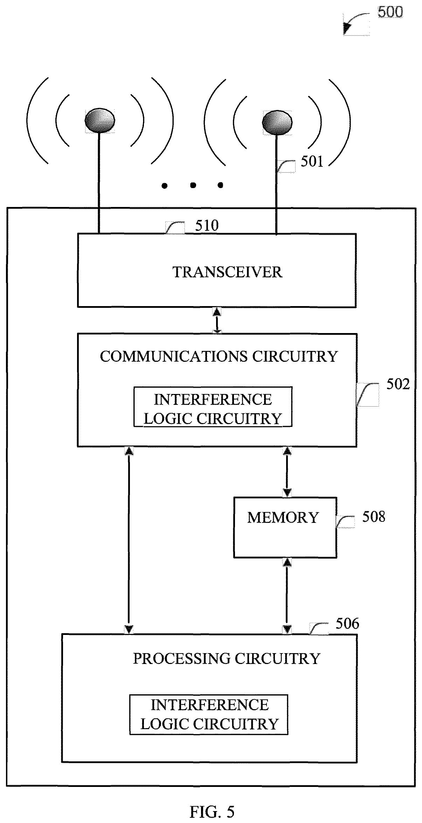

The user device(s) 1020 may comprise processing platforms such as mobile devices that are non-stationary (e.g., do not have fixed locations) and/or stationary devices. In some embodiments, the user device(s) 1020 and the AP-MLDs 1005 and 1027 may include one or more computer systems similar to the STAs shown in FIGs. 1B-1G and/or the example machine/system of FIGs 5, 6, 7, and 8.

One or more illustrative user device(s) 1020 and/or AP-MLDs 1005 and 1027 may be operable by one or more user(s) 1010. It should be noted that any addressable unit may be a station (STA). A STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 1020 and the AP-MLDs 1005 and 1027 may include STAs. The one or more illustrative user device(s) 1020 and/or AP-MLDs 1005 and 1027 may operate as an extended service set (ESS), a basic service set (BSS), a personal basic service set (PBSS), or a control point/access point (PCP/AP).

The user device(s) 1020 (e.g., 1024, 1025, 1026, 1028, or 1029) and/or AP-MLDs 1005 and 1027 may include any suitable processor-driven device including, but not limited to, a mobile device or a non-mobile, e.g., a static device. For example, user device(s) 1020 and/or AP-MLDs 1005 and 1027 may include, a user equipment (UE), a station (STA), an access point (AP), a software enabled AP (SoftAP), a personal computer (PC), a wearable processing platform (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless network interface, a mobile or portable GPS device, a DVB device, a relatively small computing device, a non-desktop computer, a "carry small live large" (CSLL) device, an ultra-mobile device (UMD), an ultra-mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

In some embodiments, the user device(s) 1020 and/or AP-MLDs 1005 and 1027 may also include mesh stations in, for example, a mesh network, in accordance with one or more IEEE 802.11 standards and/or 3GPP standards.

Any of the user device(s) 1020 (e.g., user devices 1024, 1025, 1026, 1028, and 1029) and AP-MLDs 1005 and 1027 may be configured to communicate with each other via one or more communications networks 1030 and/or 1035 wirelessly or wired. In some embodiments, the user device(s) 1020 may also communicate peer-to-peer or directly with each other with or without the AP-MLDs 1005 and 1027 and, in some embodiments, the user device(s) 1020 may also communicate peer-to-peer if enabled by the AP-MLDs 1005 and 1027. Furthermore, in the present embodiment, the AP-MLDs 1005 and 1027 may comprise 2.4 GHz, 5GHz, and 6 GHz STAs.

Any of or all the user device(s) 1020 (e.g., user devices 1024, 1025, 1026, 1028, and 1029) and AP-MLDs 1005 and 1027 may each comprise interference logic circuitry as part of wireless communications devices and as part of a platform controller to implement protocols, procedures, signaling, mapping, and/or the like as discussed herein to mitigate internal interference. For the user devices 1020, each may comprise one or more wireless communication devices that comprise interference logic circuitry and a platform controller to implement interference logic circuity to mitigate internal interference for wireless communications. For instance, firmware or other code may reside in the station management entity (SME) of each of the Wi-Fi STAs of the user devices to implement, via a baseband processor, interference logic circuitry for the Wi-Fi wireless communication devices for mitigating interference generated by internal platform devices.

For the AP-MLDs 1005 and 1027, each STA of each MLD may comprise a wireless communication device. Each STA SME and/or each multiple MAC station management entity (MM-SME) of the AP-MLDs 1005 and 1027 may comprise firmware or other code to implement interference logic circuitry for the STAs of the AP-MLDs 1005 and 1027. Furthermore, each STA and/or each AP-MLD 1005 and 1027 may comprise a platform controller with firmware or other code to implement interference logic circuitry for the STAs of the AP-MLDs 1005 and 1027.

The interference logic circuitry for each of the wireless communication devices may determine carrier frequencies and/or specific wireless communications channels to protect based on interference data collected offline for each specific platform and/or during run-time by the one or more wireless communication devices within each specific processing platform. For instance, each SME of the STAs of the AP-MLDs 1005 and 1027 may perform run-time measurements of interference for channels associated with the respective STAs. In some embodiments, the MM-SMEs of the AP-MLDs 1005 and 1027 may generate and communicate protect request signals and/or unprotect signals to request protection of Wi-Fi communication channels or carrier frequencies for the limited time frames during which the Wi-Fi communication channels or carrier frequencies have active communications. During PS modes for each respective STA, for example, the interference logic circuitry of the wireless communication devices may not request that the respective platform controller protect the otherwise active communication channels or carrier frequencies. In other embodiments, the interference logic circuitry of the SMEs of the AP MLDs 1005 and 1027 may each generate and communicate, by internal communications for the processing platform via platform wiring, protect request signals and unprotect signals to respective platform controllers for the STAs of the AP MLDs 1005 and 1027.

As another example, the interference logic circuitry of the MM-SME of the AP-MLD 1027 may determine that a first STA of the AP-MLD 1027 will be in a PS mode for 50 milliseconds of every 90 milliseconds but will be active on three 20 MHz channels of a 2.4 GHz carrier frequency during 40 milliseconds of the 90 milliseconds. The interference logic circuitry of the SME of the first STA may measure the interference on the three 20 MHz channels while there is no expected activity (during run-time) and determine that the interference pattern exceeds an amplitude threshold and/or a bandwidth threshold for one or more of the three 20 MHz channels. Based on the interference, the SME or the MM-SME may generate a protect request signal for a platform controller of the AP MLD 1027 to indicate one or more of the three 20 MHz channels for which the interference met or exceeded the thresholds along with an indication of periodicity for the protect request and communicate a protect request signal to the platform controller, via internal platform wiring, to protect the one or more of the three 20 MHz channels while the channels are active. The interference logic circuitry of the platform controller will know that the wireless communication device is in PS mode during the 50 millisecond and determine how to protect the one or more of the three 20 MHz channels while the channels are active.

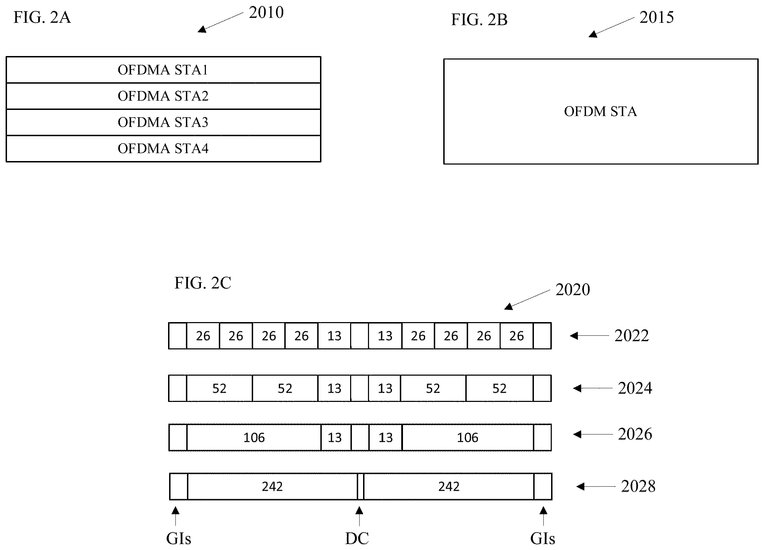

Note that while many examples herein discuss communication channels in terms of 20 MHz, many embodiments are not limited to a granularity of 20 MHz for detecting internal interference and protecting the wireless communications device from the internal interference. Many embodiments discussed herein may be active on communications channels having bandwidths of 20 MHz bandwidths, 40 MHz bandwidths, 80 MHz, 160 MHz, and 320 MHz. Furthermore, as discussed in conjunction with FIGs. 2A and 2C, these communication channels may be divided into resource units having bandwidths of e.g., 1 MHz, 2 MHz, 4 MHz, 8 MHz, 10 MHz, and/or the like. Note also that bandwidths are not limited to integers so some bandwidths may be fractional. For instance, if an active channel for communications with a remote device is a 1 MHz channel, the amplitude and bandwidth thresholds for determining if a wireless communications device should request protection for the 1 MHz communications channel are relative the bandwidth of the active channel as well as the ability of the wireless communications device and the remote device to operate on another channel. As an example, if the overall bandwidth of the channel is 20 MHz, the RU of the active communication is 1 MHz, and the remote device is capable of operating of an different subcarrier of the 20 MHz channel, the wireless communications device may switch the active communications between the wireless communications device and the remote device to a different RU of the 20 MHz channel.

In further embodiments, the SME or the MM-SME may communicate a protect request signal for a platform controller of the AP MLD 1027 to indicate one or more of the three 20 MHz channels for which the interference met or exceeded the thresholds and communicate an unprotect signal to the platform controller, via internal platform wiring, to indicate a periodicity for the unprotect signal. The interference logic circuitry of the platform controller will know that the wireless communication device is in PS mode during the periodic 50 milliseconds of the 90 milliseconds so the platform controller is informed that the first STA does not request protection for the one or more of the three 20 MHz channels while the STA is in the PS mode.

The interference logic circuitry of the platform controller may access predetermined interference measurements preloaded in memory accessible by the platform controller to determine that the internal inference may be caused by a DDR operating at, e.g., 2.4 GHz. In response to this determination, the platform controller may determine to adjust the 2.4 GHz clock frequency of the DDR to a clock frequency either up to, e.g., 3 GHz, or down to, e.g., 2 GHz for an adjusted optimal platform performance based on optimization algorithms to reduce or remove the interference caused by the clock frequency or a harmonic of the clock frequency on the three 20 MHz channels while the channels are active. Note that the platform controller may have other active channels for which the platform controller is also attenuating internal interference. Furthermore, the platform controller may revert or reassess the clock frequency of the DDR and adjust the clock frequency of the DDR accordingly (e.g., back to 2.4 GHz) for the periodic 50 milliseconds that the first STA of the AP-MLD 1027 is in PS mode.

If a situation arises that causes the MME to temporarily shift the active communications from the first STA to a second STA of the AP MLD 1027, the SME of the first STA or the MM-SME of the first STA may temporarily unprotect the one or more of the three 20 MHz channels. In some embodiments, the SME of the first STA or the MM-SME of the first STA may temporarily unprotect the one or more of the three 20 MHz channels by sending an unprotect signal to the platform controller an indication including the duration of the 40 milliseconds of the 90 milliseconds of the PS mode duty cycle for the first STA and sending a protect signal to the platform controller when the first STA resumes active communications on the three 20 MHz channels.

Note that embodiments are not limited to STAs capable of any particular set of carrier frequencies and the STAs of AP MLDs are not required to have sets of STAs with the same carrier frequencies.

The non-AP MLDs such as the user devices 1020 and the AP-MLDs 1005 and 1027 may implement transition protocols to enable the non-AP MLDs such as the laptop 1025 to transition links between the AP MLDs 1005 and 1027 via a (re)association request frame 1021 and a (re)association response frame 1022. The MM-SME may be a component of station management of a MLD (such as non-AP MLDs and AP MLDs) that interfaces with SMEs to manage and/or coordinate multiple cooperating, collocated STAs of the MLD. The SME of each of the STAs of the MLD may interface with a respective MAC sublayer management entity (MLME) and physical layer management entity (PLME) of the STA.

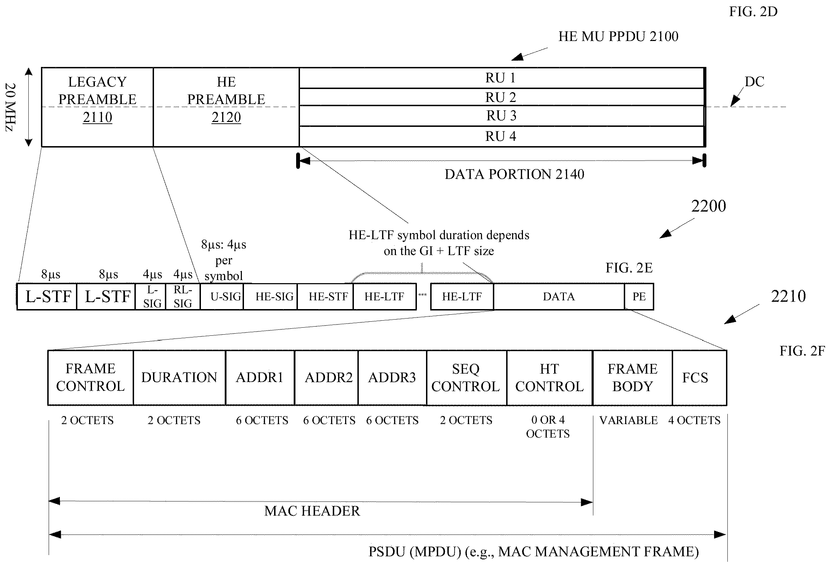

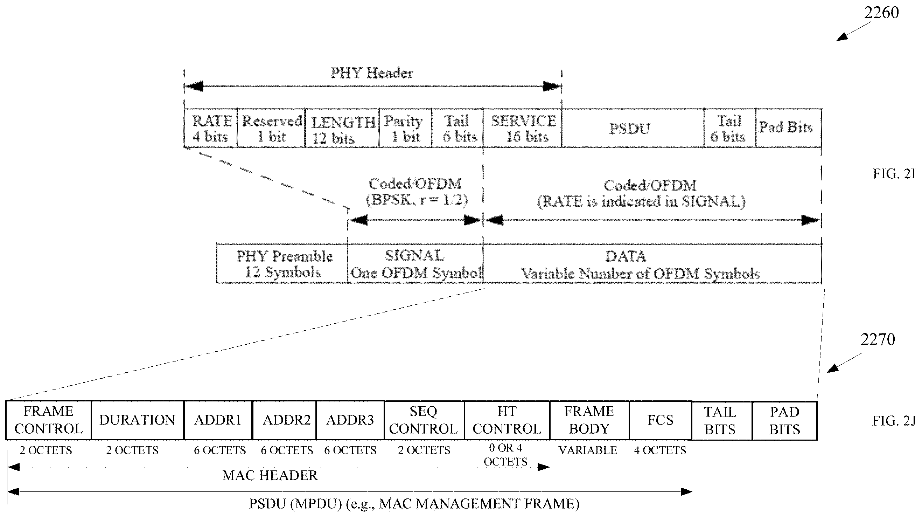

The (re)association frame 1021 may be a MAC management frame and may comprise fields such as the MAC management frames shown in FIGs. 2F and 2J. The laptop 1025 may comprise information about the AP MLD 1027 based on receipt of a beacon frame, a probe response frame, one or more other discovery and/or advertisement frames, and/or the like. The laptop 1025 may generate the (re)association request frame 1021 to form a connection with the AP MLD 1027.

After transmission of the (re)association request frame 1021, the laptop 1025 may receive a (re)association response frame 1022 that includes a link ID for new link with the AP MLD 1027. After successfully establishing a link between the laptop 1025 and the AP MLD 1027, the laptop 1025 may transmit a disassociation request frame to the AP MLD 1005 and receive a disassociation response frame from the AP MLD 1005.

Note that the example includes AP STAs for both AP MLDs 1005 and 1027 but embodiments are not so limited.

Any of the communications networks 1030 and/or 1035 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 1030 and/or 1035 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 1030 and/or 1035 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 1020 (e.g., user devices 1024, 1025, 1026, 1028, and 1029), the AP MLD 1005, and the AP-MLD 1027 may include one or more communications antennas. The one or more communications antennas may be any suitable type of antennas corresponding to the communications protocols used by the user device(s) 1020 (e.g., user devices 1024, 1025, 1026, 1028, and 1029) and AP-MLD 1005. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 1020, AP MLD 1005, and/or AP-MLD 1027.

Any of the user device(s) 1020 (e.g., user devices 1024, 1025, 1026, 1028, and 1029), the AP MLD 1005, and AP-MLD 1027 may be configured to wirelessly communicate in a wireless network. Any of the user device(s) 1020 (e.g., user devices 1024, 1025, 1026, 1028, and 1029), the AP MLD 1005, and AP-MLD 1027 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 1020 (e.g., user devices 1024, 1025, 1026, 1028, and 1029), the AP MLD 1005, and AP-MLD 1027 may be configured to perform any given directional transmission towards one or more defined transmit sectors. Any of the user device(s) 1020 (e.g., user devices 1024, 1025, 1026, 1028, and 1029), the AP MLD 1005, and AP-MLD 1027 may be configured to perform any given directional reception from one or more defined receive sectors.

MIMO beamforming in a wireless network may be accomplished using RF beamforming and/or digital beamforming. In some embodiments, in performing a given MIMO transmission, user devices 1020, AP MLD 1005, and/or AP-MLD 1027 may be configured to use all or a subset of its one or more communications antennas to perform MIMO beamforming.

Any of the user devices 1020 (e.g., user devices 1024, 1025, 1026, 1028, and 1029), the AP MLD 1005, and AP-MLD 1027 may include any suitable radio and/or transceiver for transmitting and/or receiving radio frequency (RF) signals in the bandwidth and/or channels corresponding to the communications protocols utilized by any of the user device(s) 1020 and AP-MLD 1005 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g., 802.11b, 802.11g, 802.11n, 802.11ax, 802.11be), 5 GHz channels (e.g., 802.11n, 802.11ac, 802.11ax, 802.11be), 6 GHz (e.g., 802.11be), or 60 GHz channels (e.g., 802.11ad, 802.11ay, Next Generation Wi-Fi) or 800 MHz channels (e.g., 802.11ah). The communications antennas may operate at 28 GHz, 40 GHz, or any carrier frequency between 45 GHz and 75 GHz. It should be understood that this list of communication channels in accordance with certain 802.11 standards is only a partial list, and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g., IEEE 802.11af, IEEE 802.22), white band frequency (e.g., white spaces), or other packetized radio communications. The radio component may include any known receiver and baseband suitable for communicating via the communications protocols. The radio component may further include a power amplifier (PA), a low noise amplifier (LNA), additional signal amplifiers, an analog-to-digital (A/D) converter, one or more buffers, and a digital baseband.

FIG. 1B depicts an embodiment 1100 illustrating interactions between stations (STAs) to establish multiple links between an access point (AP) multi-link device (MLD) 1120 and a non-AP MLD 1130. The AP MLD 1120 has three affiliated AP STAs: AP STA 1 operates on 2.4 GHz band, AP STA 2 operates on 5 GHz band, and AP STA 3 operates on 6 GHz band. The non-AP STA 1 affiliated with the non-AP MLD 1130 sends an association request frame (or a reassociation request frame) to AP STA 1 affiliated with the AP MLD 1120. The association request frame may have a TA field set to the MAC address of the non-AP STA 1 and an RA field set to the MAC address of the AP STA 1. The association request frame may include complete information of non-AP STA 1, non-AP STA 2, and non-AP STA 3 to request up to four links to be setup (one link between AP STA 1 and non-AP STA 1, one link between AP STA 2 and non-AP STA 2, and one link between AP STA 3 and non-AP STA 3) and a multi-link (ML) element that indicates the MLD MAC address of the non-AP MLD 1130.

AP STA 1, affiliated with the AP MLD 1120, may send an association response frame to non-AP STA 1 affiliated with the non-AP MLD 1130 with a TA field of the association response frame is set to the MAC address of the AP STA 1 and an RA field of the association response frame set to the MAC address of the non-AP STA 1, to indicate successful multi-link setup 1140. The association response frame may include complete information of AP STA 1, AP STA 2, and AP STA 3 and an ML element that indicates the MLD MAC address of the AP MLD 1120. After successful ML setup between the non-AP MLD 1130 and the AP MLD 1120, three links are setup (LINK 1 between AP 1 and non-AP STA 1, LINK 2 between AP 2 and non-AP STA 2, and LINK 3 between AP STA 3 and non-AP STA 3).

In some embodiments, the non-AP MLD 1130 may associate with less than all the links available from the AP MLD 1120 for various reasons. For instance, in some embodiments, the non-AP MLD 1130 may only be capable of establishing two of the links. In some embodiments, the non-AP MLD 1130 may establish a link with a second AP MLD because the second AP MLD may have a better signal-to-noise ratio associated with one or more links and be associated with the same ESS. In some embodiments, the non-AP MLD 1130 may establish a link with a second AP MLD because the second AP MLD may be associated with a different ESS or a BSS that is not associated with the BSS of the AP MLD 1120.

During the association process, the AP MLD 1120 may establish communications protocols including identification of any parameters that differ from default parameters, preferential communications protocols, and/or negotiate communications protocols for the links.

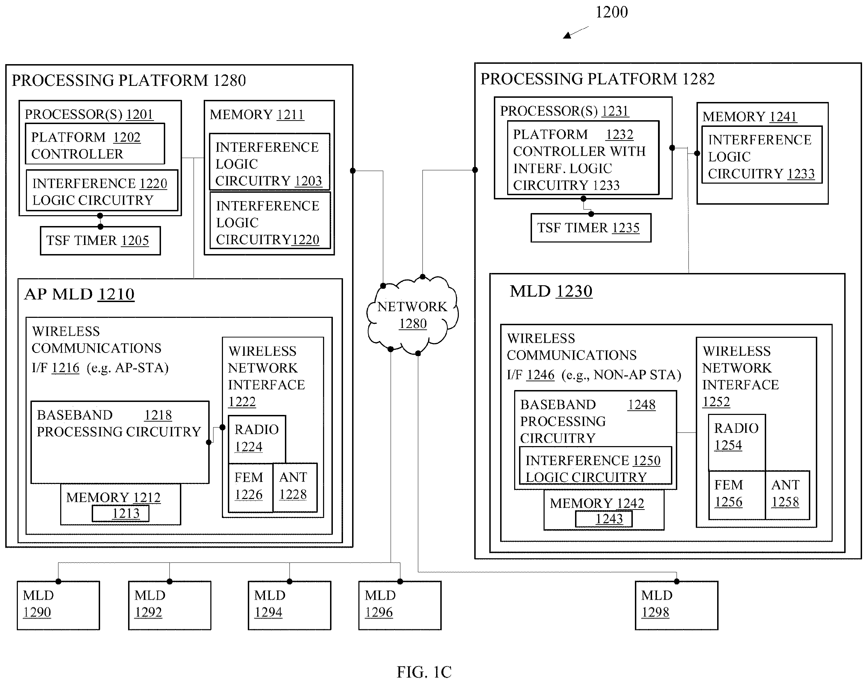

FIG. 1C depicts an embodiment of a system 1200 including processing platforms 1280 and 1282 with MLDs to implement interference logic circuitry, in accordance with one or more example embodiments. System 1200 may transmit or receive as well as generate, decode, and interpret transmissions between an AP MLD 1210 and multiple MLDs 1230, 1290, 1292, 1294, 1296, and 1298, associated with the AP MLD 1210. The AP MLD 1210 may be wired and wirelessly connected to each of the MLDs 1230, 1290, 1292, 1294, 1296, and 1298.

The processing platform 1280 may comprise processor(s) 1201, a memory 1211, a timing synchronization function (TSF) timer 1205, and an AP-MLD 1210. The processing platform 1282 may comprise processor(s) 1231, a memory 1241, a TSF timer 1235, and an MLD 1230. The processor(s) 1201 may comprise a platform controller 1202 with interference logic circuitries 1203 and 1220 and the processor(s) 1231 may comprise a platform controller 1232 with interference logic circuitry 1233.

Note that the MLD 1230, as illustrated, shows circuitry of the MLD 1230 that may be representative of multiple instances of the circuitry (e.g., one per non-AP STA) in the MLD 1230. For instance, in some embodiments, each non-AP STA of the MLD 1230 may comprise baseband processing circuitry 1248 with interference logic circuitry 1250, as well as one or more wireless communications interfaces 1246. In other embodiments, the MLD 1230 may comprise one or more instances of the platform controller 1232 with interference logic circuitry 1233 and one or more instances of the baseband processing circuitry 1248 with interference logic circuitry 1250. Furthermore, at least part of the firmware or code of the interference logic circuitry 1233 may reside in memory 1241 and may be accessed by the platform controller 1232. Similarly, at least part of the firmware or code of the interference logic circuitry 1250 may reside in the memory 1242 and may be accessed by the baseband processing circuitry 1248.

In some embodiments, the processing platform 1282 may include one or more computer systems similar to that of the example machines/systems shown in FIGs 5, 6, 7, and 8 and similar to the user devices 1020 and AP MLD 1005 and AP MLD 1027 shown in FIG. 1A.

Note also that the AP MLD 1210, as illustrated, shows circuitry of the AP MLD 1210 that may be representative of multiple instances of the circuitry (e.g., one per AP STA) in the AP MLD 1210. For instance, in some embodiments, each AP STA of the AP MLD 1210 may comprise baseband processing circuitry 1218 with interference logic circuitry 1220, as well as one or more wireless communications interfaces 1216. In other embodiments, the AP MLD 1210 may comprise one or more instances of the platform controller 1202 with interference logic circuitry 1203 and one or more instances of the baseband processing circuitry 1218 with interference logic circuitry 1220. Furthermore, at least part of the firmware or code of the interference logic circuitries 1203 and 1220 may reside in the memory 1211 and may be accessed by the platform controller 1202 and the baseband processing circuitry 1218, respectively.

Each MLD 1230, 1290, 1292, 1294, 1296, and 1298 may be a processing platform and may include interference logic circuitry, such as the interference logic circuitries 1233 and 1250 of the processing platform 1282, to mitigate internal interference of channels (or links) between the MLDs and an AP MLD 1210 radiated from internal platform devices of the processing platforms. Furthermore, the processing platform 1280 may comprise interference logic circuitries 1203 and 1220 to mitigate internal interference of channels (or links) between the MLDs and the AP MLD 1210 radiated from internal platform devices of the processing platform 1280.

In some embodiments, the interference logic circuitry of a wireless communications device such as the SME of the STAs and/or the MM-SMEs of the MLDs may identify situations in which a significant amount of interference on an active channel is a result of internal interference. For example, after sending a data packet from the MLD 1230 to the AP MLD 1210 and receiving an acknowledgement (ACK) frame from the AP MLD 1210, the one or more channels or links through which the data packets and the ACK packet were communicated should be inactive for a period of, e.g., 100 milliseconds. During the 100 milliseconds, the interference logic circuitry 1250 of the baseband processing circuitry 1248 may detect interference on the one or more channels. Based on the presence of the interference and the timing, and/or based on a comparison of measurements of the interference against interference data or patterns stored in the memory 1241, the interference logic circuitry 1250 may determine that the interference is generated internally to the platform by platform devices of the processing platform 1282. In some embodiments, the interference logic circuitry 1250 may compare measurements or metrics of the interference against one or more thresholds such as amplitude thresholds and bandwidth thresholds to determine whether or not to request protection from the platform controller 1232. If the interference has a narrow bandwidth, smaller than a bandwidth threshold, the interference logic circuitry 1250 may determine that the baseband logic circuitry 1248 may handle the interference without requesting protection for the channel by, e.g., employing a notch filter. Similarly, if the amplitude of the interference is lower than an amplitude threshold, the interference logic circuitry 1250 may determine that the baseband logic circuitry 1248 may handle the interference without requesting protection for the channel. On the other hand, if the amplitude of the interference and the bandwidth of the interference meets or exceeds the amplitude and bandwidth thresholds, respectively, the interference logic circuitry 1250 may determine that the baseband logic circuitry 1248 should request protection for the one or more channels. Note that the bandwidth thresholds may, in some embodiments, be relative to the bandwidth of the active communications and the bandwidths of the active communications may comprise one or more resource units of the overall bandwidth of the channel.

After a determination that the protection should be requested, the baseband logic circuitry 1248 may generate a message for the platform controller 1232 and communication or send or communicate the message to the platform controller 1232 to request protection. Communication of the message to request protection may comprise application of the message to platform wiring that is internal to the processing platform 1282.

The baseband logic circuitry 1248 may generate and send the message comprising a protect request signal. In some embodiments, the protect request signal may identify the signal as a protect request signal (with, e.g., a command type or command identifier (ID)), identify the one or more channels (or RUs of one or more channels) within which the internal interference was measured, identify the timing of active communications on the one or more channels via a one-time time frame or a fixed duty cycle, identify the bandwidth of the active communications, and, in some embodiments, associate the request with one or more priority indications to identify one or more priorities associated with the communications on the one or more channels. In other embodiments, the protect request signal may indicate the one or more channels or one or more RUs to protect and the time frame may be limited by the platform controller 1232 to a time frame during which the channels or RUs are active or a time frame during which the STA of the MLD 1230 or the MLD 1230 is not in a PS mode.

Note that identification of the time frame of the active communication may set a limited time frame within which protection is requested for the one or more channels or RUs and identification of the specific channel, channels, or RUs that incur the interference and/or the bandwidth of the active communication may allow the platform controller 1232 to narrowly determine adjustments required to attenuate or remove the internal interference from the active communications on the one or more channels or RUs while the one or more channels or RUs are active.

Note that while interference logic circuitry 1250 is shown as executing on the baseband circuitry 1248 and may have code and/or firmware in memory 1242, the interference logic circuitry 1250 may reside in any memory on the processing platform 1282 of the MLD 1230 and may be executed by any processor with access to the memory within which the interference logic circuitry code and/or firmware resides. For instance, the interference logic circuitry 1250 may execute on the processor(s) 1231 to perform the all the functionality described herein through communication between the processor(s) 1231 and the baseband circuitry 1248. In such embodiments, the memory 1241 may store and maintain the code and/or firmware for the interference logic circuitry 1250.

The interference logic circuitry 1233 of the platform controller 1232 may receive the protect request signal, identify the protect request signal as a protection request, determine the scope of the interference in terms the specific channels, RUs, subcarriers, or frequencies, determine the timing of adjustments needed to mitigate the interference, and, optionally, take into account the one or more priorities for protection of the channels or the active channel bandwidth. In some embodiments, the interference logic circuitry 1233 of the platform controller 1232 may compare the timing and the frequencies of the interference with one or more interference patterns stored in the memory 1241 to determine which platform devices of the processing platform 1282 may be the source of the interference. Upon determining the source of the interference, the interference logic circuitry 1233 of the platform controller 1232 may perform algorithms to determine an adjustment to the clock frequency of the platform device(s) that are the source(s) of the interference based on a power budget, a thermal budget, and an acoustic budget to optimize a performance of the processing platform 1282 while the one or more channels or RUs are active.

In some embodiments, the time frame for active communications on one or more channels or RUs may be variable but all time frames for active communications by the MLD 1230 may be limited to time frames during which the MLD 1230, or a STA of the MLD 1230 is not in a PS mode. Thus, in some embodiments, the interference logic circuitry 1250 may determine the time frame(s) (such as periodic time frames) during which the STA or the MLD 1230 are in the PS mode and generate/communicate an unprotect signal to communicate to the platform controller 1232. In some embodiments, the unprotect signal may comprise a command or command ID to identify an unprotect signal, a STA ID, a time frame for PS mode, a fixed periodicity or duty cycle for the PS mode (or that the unprotect signal is a single time frame), and a start time for the PS mode. In other embodiments, the unprotect signal may comprise a time frame and optionally an indication that the time frame is periodic or not periodic.

Upon receipt of the unprotect signal, the interference logic circuitry 1233 of the platform controller 1232 may, in some embodiments, determine that the signal is an unprotect signal for the STA ID, the time frame as being one-time or periodic, and a start time for the PS mode. Thereafter, the interference logic circuitry 1233 of the platform controller 1232 may perform algorithms to determine an adjustments of one or more clock frequencies of the platform device(s) based on a power budget, a thermal budget, and an acoustic budget to optimize a performance of the processing platform 1282 while the STA associated with the STA ID is in PS mode. In other words, any protection requested by the STA associated with the STA ID may be ignored for the purposes of determining the parameters for optimal performance of the processing platform 1282 while the STA is in PS mode.

In the present embodiment, the processing platform 1280 comprises processor(s) 1201, which may comprise a platform controller 1202. The platform controller 1202 may comprise a processor integrated circuit (optionally in a distinct chip package) dedicated for operations of the platform controller 1202 or code and/or firmware for the platform controller 1202 may execute on one or more of the processor(s) 1201. For instance, the processing platform 1280 may have several processors and/or one or more processors that each have multiple processor cores. In such embodiments, the code and/or firmware for functionality of the platform controller 1202 may execute on one or more dedicated processors or processor cores, or may execute on more than one of the processors and/or more than one of the processor cores of the processor(s) 1201. Furthermore, different parts of the code and/or firmware for the platform controller 1202 may execute on different processors and/or processor cores and, in some embodiments, the different parts of the code and/or firmware for the platform controller 1202 may execute on different processors and/or processor cores concurrently (i.e., in parallel).

The code and/or firmware of the platform controller 1202 may reside partially in one or more of the processor(s) 1201 for the purposes of execution or in anticipation of execution. The whole code and/or firmware for the platform controller 1202 may reside in the memory 1211, which may represent various types of memory such as DDR, LPDDR, buffers, registers, cache, flash, any other memory configurations, and/or the like.

In the present embodiment, the code and/or firmware of the platform controller 1202 may comprise interference logic circuitry 1203. The platform controller 1202 may access the memory 1211 via one or more high-speed interconnects and/or a bus to access the code and/or firmware of the interference logic circuitry 1203 as well as, in some embodiments, the other code and/or firmware of the platform controller 1202.

In the present embodiment, one or more of the processor(s) 1201 may execute interference logic circuitry 1220 to perform the same functionality as discussed for interference logic circuitry 1250 except that the interference logic circuitry 1220 may instruct the baseband processing circuitry 1218 to perform the run-time measurements of the wireless communication channels. In such embodiments, the protect request signals and unprotect signals may comprise communications between the processors and/or processor cores of the processor(s) 1201.

In some embodiments, the code and/or firmware of the platform controller 1202, the code and/or firmware of the interference logic circuitry 1203, and the code and/or firmware of the interference logic circuitry 1220 may be parts of the same code and/or firmware and may execute on one or more of the processors and/or processor cores of the processor(s) 1201. For instance, code and/or firmware for processor(s) 1201 may include functionality of the platform controller 1202 functionality of the interference logic circuitry 1203, and functionality of the interference logic circuitry 1220.

In such embodiments, the protect request signals and the unprotect signals may comprise signaling via data stored in memory (buffers, registers, cache, and/or the like) within the processors and/or processor cores of the processor(s) 1201. In some embodiments, the protect request signals and the unprotect signals may comprise signaling via data stored in memory 1211 and/or memory within the processors and/or processor cores of the processor(s) 1201. For example, communication of a protect request signal by the interference logic circuitry 1220 to the platform controller 1202 may comprise setting one or more bits in a register, a buffer, a cache, or other memory within one of the processor(s) 1201. Similarly, communication of an unprotect signal by the interference logic circuitry 1220 to the platform controller 1202 may comprise setting one or more bits in a register, a buffer, a cache, or other memory within one of the processor(s) 1201. In other words, the platform wiring discussed herein for communication of the protect request signal and the unprotect signal may comprise a conductive element of an integrated circuit within a die of one or the processor(s) 1201.

Note that each of the multiple MLDs 1290, 1292, 1294, 1296, and 1298 may be processing platforms that include interference logic circuitry and a platform controller to perform operations similar to any of the embodiments discussed herein for the processing platforms 1280 and 1282 to mitigate internal interference through protection for a limited time frame for active communication channels.

The processing platform 1280 may comprise processor(s) 1201 and memory 1211, respectively. The processor(s) 1201 may comprise any data processing device such as a microprocessor, a microcontroller, a state machine, and/or the like, and may execute instructions or code in the memory 1211. The memory 1211 may comprise a storage medium such as Dynamic Random Access Memory (DRAM), read only memory (ROM), buffers, registers, cache, flash memory, hard disk drives, solid-state drives, or the like. The memory 1211 may, in some embodiments, store code and/or firmware for the platform controller 1202, code and/or firmware for the interference logic circuitry 1220, code and/or firmware for the interference logic circuitry 1220, predetermined interference patterns or data, and/or run-time measurements of internal interference. The memory 1212, of the AP MLD 1210, is coupled with the baseband processing circuitry 1218 of the wireless communications interface 1216 and may store the frames, frame structures, frame headers, etc., 1213, may, in some embodiments, also comprise code for interference logic circuitry 1220, predetermined interference patterns or data, run-time measurements of internal interference, and code to generate, scramble, encode, decode, parse, and interpret MAC frames and/or PHY frames and physical layer protocol data units (PPDUs).

The baseband processing circuitry 1218 may comprise a baseband processor and/or one or more circuits to implement an MLD station management entity (MM-SME) and a station management entity (SME) per link. The MM-SME may coordinate management of, communications between, and interactions between SMEs for the links.

In some embodiments, the SME may interact with a MAC layer management entity to perform MAC layer functionality and a PHY management entity to perform PHY functionality. In such embodiments, the baseband processing circuitry 1218 may interact with processor(s) 1201 to coordinate higher layer functionality with MAC layer and PHY functionality. For instance, in some embodiments, the higher layer functionality may comprise code and/or firmware for the platform controller 1202, code and/or firmware for the interference logic circuitry 1220, code and/or firmware for the interference logic circuitry 1220, or a combination thereof.

In some embodiments, the baseband processing circuitry 1218 may interact with one or more analog devices to perform PHY functionality such as scrambling, encoding, modulating, and the like. In other embodiments, the baseband processing circuitry 1218 may execute code to perform one or more of the PHY functionality such as scrambling, encoding, modulating, and the like.

The MAC layer functionality may execute MAC layer code stored in the memory 1211. In further embodiments, the MAC layer functionality may interface the processor(s) 1201.

The MAC layer functionality may communicate with the PHY via the SME to transmit a MAC frame such as a multiple-user (MU) ready to send (RTS), referred to as a MU-RTS, in a PHY frame such as an extremely high throughput (EHT) MU PPDU to the MLD 1230. The MAC layer functionality may generate frames such as management, data, and control frames.

The PHY may prepare the MAC frame for transmission by, e.g., determining a preamble to prepend to a MAC frame to create a PHY frame. The preamble may include one or more short training field (STF) values, long training field (LTF) values, and signal (SIG) field values. A wireless network interface 1222 or the baseband processing circuitry 1218 may prepare the PHY frame as a scrambled, encoded, modulated PPDU in the time domain signals for the radio 1224. Furthermore, the TSF timer 1205 may provide a timestamp value to indicate the time at which the PPDU is transmitted.

After processing the PHY frame, a radio 1225 may impress digital data onto subcarriers of RF frequencies for transmission by electromagnetic radiation via elements of an antenna array or antennas 1224 and via the network 1280 to a receiving MLD STA of a MLD such as the MLD 1230.

The wireless network I/F 1222 also comprises a receiver. The receiver receives electromagnetic energy, extracts the digital data, and the analog PHY and/or the baseband processor 1218 decodes a PHY frame and a MAC frame from a PPDU.

The MLD 1230 may receive a PPDU of the EHT MU PPDU from the AP MLD 1210 via the network 1280. The processing platform 1282 comprising the MLD 1230 may include processor(s) 1231 and memory 1241. The processor(s) 1231 may comprise any data processing device such as a microprocessor, a microcontroller, a state machine, and/or the like, and may execute instructions or code in the memory 1241. The memory 1241 may comprise a storage medium such as Dynamic Random Access Memory (DRAM), read only memory (ROM), buffers, registers, cache, flash memory, hard disk drives, solid-state drives, or the like. The memory 1241 may, in some embodiments, store code and/or firmware for the platform controller 1232, code and/or firmware for the interference logic circuitry 1233 code, predetermined interference patterns or data, and/or run-time measurements of internal interference. The memory 1242 of the wireless communications interface 1246 is coupled with the baseband processing circuitry 1248 of the wireless communications interface 1246 and may store the frames, frame structures, frame headers, etc., 1243, may, in some embodiments, also comprise code for interference logic circuitry 1250, predetermined interference patterns or data, run-time measurements of internal interference, and code to generate, scramble, encode, decode, parse, and interpret MAC frames and/or PHY frames and physical layer protocol data units (PPDUs).

The baseband processing circuitry 1248 may comprise a baseband processor and/or one or more circuits to implement a SME and the SME may interact with a MAC layer management entity to perform MAC layer functionality and a PHY management entity to perform PHY functionality. In such embodiments, the baseband processing circuitry 1248 may interact with processor(s) 1231 to coordinate higher layer functionality with MAC layer and PHY functionality.

In some embodiments, the baseband processing circuitry 1248 may interact with one or more analog devices to perform PHY functionality such as descrambling, decoding, demodulating, and the like. In other embodiments, the baseband processing circuitry 1248 may execute code to perform one or more of the PHY functionalities such as descrambling, decoding, demodulating, and the like.

The MLD 1230 may receive the PPDU of the EHT MU PPDU at the antennas 1258, which pass the signals along to the FEM 1256. The FEM 1256 may amplify and filter the signals and pass the signals to the radio 1254. The radio 1254 may filter the carrier signals from the signals and determine if the signals represent a PPDU. If so, analog circuitry of the wireless network I/F 1252 or physical layer functionality implemented in the baseband processing circuitry 1248 may demodulate, decode, descramble, etc. the PPDU. The baseband processing circuitry 1248 may identify, parse, and interpret a MAC service data unit (MSDU) from the physical layer service data unit (PSDU) of the EHT MU PPDU.

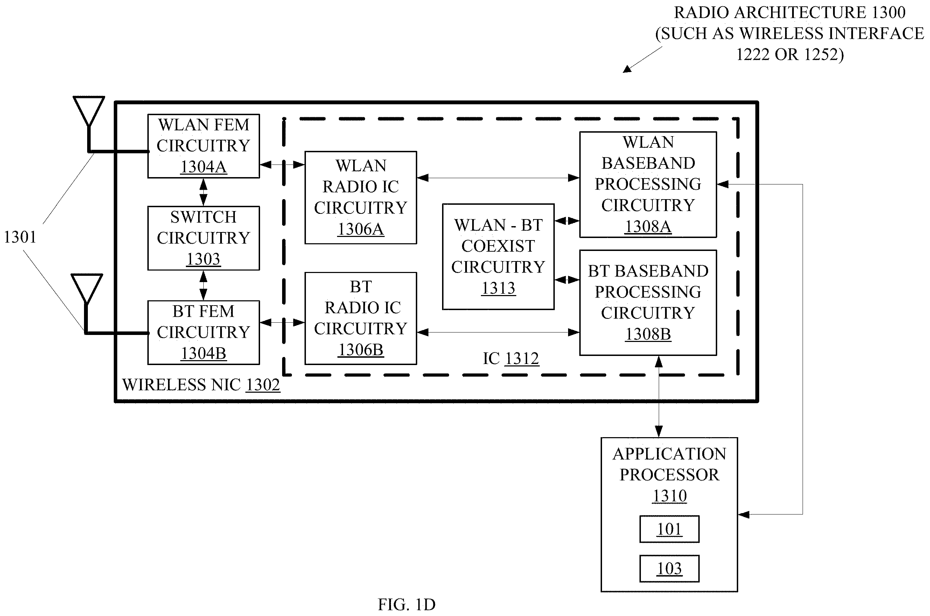

FIG. 1D is a block diagram of a radio architecture 1300 such as the wireless communications I/F 1222 and 1252 in accordance with some embodiments that may be implemented in, e.g., the AP MLD 1210 and/or the MLD 1230 of FIG. 1C. The radio architecture 1300 may include radio front-end module (FEM) circuitry 1304a-b, radio IC circuitry 1306a-b and baseband processing circuitry 1308a-b. The radio architecture 1300 as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1304a-b may include a WLAN or Wi-Fi FEM circuitry 1304a and a Bluetooth (BT) FEM circuitry 1304b. The WLAN FEM circuitry 1304a may include a receive signal path comprising circuitry configured to operate on WLAN RF signals received from one or more antennas 1301, to amplify the received signals and to provide the amplified versions of the received signals to the WLAN radio IC circuitry 1306a for further processing. The BT FEM circuitry 1304b may include a receive signal path which may include circuitry configured to operate on BT RF signals received from one or more antennas 1301, to amplify the received signals and to provide the amplified versions of the received signals to the BT radio IC circuitry 1306b for further processing. FEM circuitry 1304a may also include a transmit signal path which may include circuitry configured to amplify WLAN signals provided by the radio IC circuitry 1306a for wireless transmission by one or more of the antennas 1301. In addition, FEM circuitry 1304b may also include a transmit signal path which may include circuitry configured to amplify BT signals provided by the radio IC circuitry 1306b for wireless transmission by the one or more antennas. In the embodiment of FIG. 1D, although FEM 1304a and FEM 1304b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1306a-b as shown may include WLAN radio IC circuitry 1306a and BT radio IC circuitry 1306b. The WLAN radio IC circuitry 1306a may include a receive signal path which may include circuitry to down-convert WLAN RF signals received from the FEM circuitry 1304a and provide baseband signals to WLAN baseband processing circuitry 1308a. BT radio IC circuitry 1306b may in turn include a receive signal path which may include circuitry to down-convert BT RF signals received from the FEM circuitry 1304b and provide baseband signals to BT baseband processing circuitry 1308b. WLAN radio IC circuitry 1306a may also include a transmit signal path which may include circuitry to up-convert WLAN baseband signals provided by the WLAN baseband processing circuitry 1308a and provide WLAN RF output signals to the FEM circuitry 1304a for subsequent wireless transmission by the one or more antennas 1301. BT radio IC circuitry 1306b may also include a transmit signal path which may include circuitry to up-convert BT baseband signals provided by the BT baseband processing circuitry 1308b and provide BT RF output signals to the FEM circuitry 1304b for subsequent wireless transmission by the one or more antennas 1301. In the embodiment of FIG. 1D, although radio IC circuitries 1306a and 1306b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1308a-b may include a WLAN baseband processing circuitry 1308a and a BT baseband processing circuitry 1308b. The WLAN baseband processing circuitry 1308a may include a memory, such as, for example, a set of RAM arrays in a Fast Fourier Transform or Inverse Fast Fourier Transform block (not shown) of the WLAN baseband processing circuitry 1308a. Each of the WLAN baseband circuitry 1308a and the BT baseband circuitry 1308b may further include one or more processors and control logic to process the signals received from the corresponding WLAN or BT receive signal path of the radio IC circuitry 1306a-b, and to also generate corresponding WLAN or BT baseband signals for the transmit signal path of the radio IC circuitry 1306a-b. Each of the baseband processing circuitries 1308a and 1308b may further include physical layer (PHY) and medium access control layer (MAC) circuitry, and may further interface with a device for generation and processing of the baseband signals and for controlling operations of the radio IC circuitry 1306a-b.

Referring still to FIG. 1D, according to the shown embodiment, WLAN-BT coexistence circuitry 1313 may include logic providing an interface between the WLAN baseband circuitry 1308a and the BT baseband circuitry 1308b to enable use cases requiring WLAN and BT coexistence. In addition, a switch circuitry 1303 may be provided between the WLAN FEM circuitry 1304a and the BT FEM circuitry 1304b to allow switching between the WLAN and BT radios according to application needs. In addition, although the antennas 1301 are depicted as being respectively connected to the WLAN FEM circuitry 1304a and the BT FEM circuitry 1304b, embodiments include within their scope the sharing of one or more antennas as between the WLAN and BT FEMs, or the provision of more than one antenna connected to each of FEM 1304a or 1304b.

In some embodiments, the front-end module circuitry 1304a-b, the radio IC circuitry 1306a-b, and baseband processing circuitry 1308a-b may be provided on a single radio card, such as wireless network interface card (NIC) 1302. In some other embodiments, the one or more antennas 1301, the FEM circuitry 1304a-b and the radio IC circuitry 1306a-b may be provided on a single radio card. In some other embodiments, the radio IC circuitry 1306a-b and the baseband processing circuitry 1308a-b may be provided on a single chip or integrated circuit (IC), such as IC 1312.

In some embodiments, the wireless NIC 1302 may include a WLAN radio card and may be configured for Wi-Fi communications, although the scope of the embodiments is not limited in this respect. In some of these embodiments, the radio architecture 1300 may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 1300 may be part of a Wi-Fi communication station (STA) such as a wireless access point (AP), a base station or a mobile device including a Wi-Fi device. In some of these embodiments, radio architecture 1300 may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2020, IEEE 802.11ay-2021, IEE 802.11ba-2021, IEEE 802.11ax-2021, and/or IEEE 802.11be standards and/or proposed specifications for WLANs, although the scope of embodiments is not limited in this respect. The radio architecture 1300 may also be suitable to transmit and/or receive communications in accordance with other techniques and standards.

In some embodiments, the radio architecture 1300 may be configured for high-efficiency Wi-Fi (HEW) communications in accordance with the IEEE 802.11ax-2021 standard. In these embodiments, the radio architecture 1300 may be configured to communicate in accordance with an OFDMA technique, although the scope of the embodiments is not limited in this respect.

In some other embodiments, the radio architecture 1300 may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 1D, the BT baseband circuitry 1308b may be compliant with a Bluetooth (BT) connectivity specification such as Bluetooth 5.0, or any other iteration of the Bluetooth specification.

In some embodiments, the radio architecture 1300 may include other radio cards, such as a cellular radio card configured for cellular (e.g., 5GPP such as LTE, LTE-Advanced or 7G communications).

In some IEEE 802.11 embodiments, the radio architecture 1300 may be configured for communication over various channel bandwidths including bandwidths having center frequencies of about 2.4 GHz, 5 GHz, and 6 GHz. The various bandwidths may include bandwidths of about 20 MHz, 40 MHz, 80 MHz, 160 MHz, 240 MHz, and 320 MHz with contiguous or non-contiguous bandwidths having increments of 20 MHz, 40 MHz, 80 MHz, 160 MHz, 240 MHz, and 320 MHz. The scope of the embodiments is not limited with respect to the above center frequencies, however.

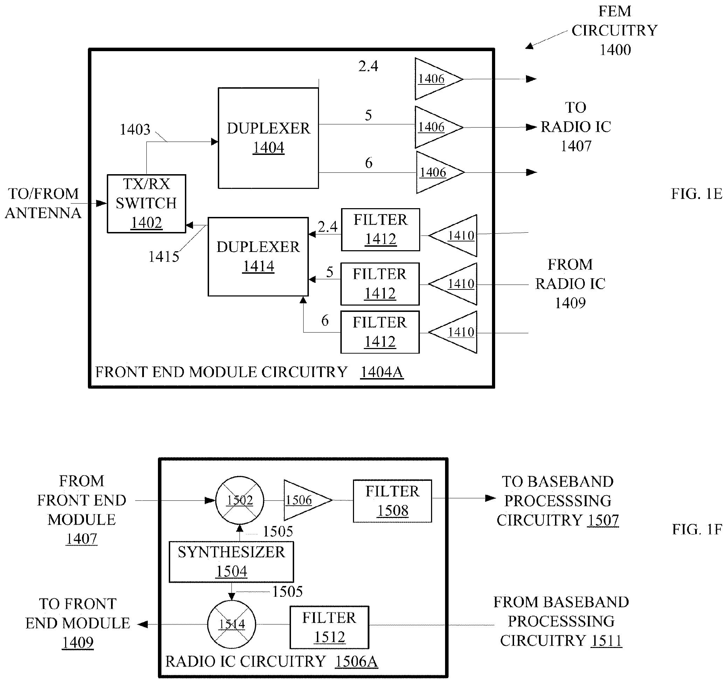

FIG. 1E illustrates FEM circuitry 1400 such as WLAN FEM circuitry 1304a shown in FIG. 1 D in accordance with some embodiments. Although the example of FIG. 1E is described in conjunction with the WLAN FEM circuitry 1304a, the example of FIG. 1E may be described in conjunction with other configurations such as the BT FEM circuitry 1304b.

In some embodiments, the FEM circuitry 1400 may include a TX/RX switch 1402 to switch between transmit mode and receive mode operation. The FEM circuitry 1400 may include a receive signal path and a transmit signal path. The receive signal path of the FEM circuitry 1400 may include a low-noise amplifier (LNA) 1406 to amplify received RF signals 1403 and provide the amplified received RF signals 1407 as an output (e.g., to the radio IC circuitry 1306a-b (FIG. 1D)). The transmit signal path of the circuitry 1304a may include a power amplifier (PA) to amplify input RF signals 1409 (e.g., provided by the radio IC circuitry 1306a-b), and one or more filters 1412, such as band-pass filters (BPFs), low-pass filters (LPFs) or other types of filters, to generate RF signals 1415 for subsequent transmission (e.g., by one or more of the antennas 1301 (FIG. 1D)) via an example duplexer 1414.

In some dual-mode embodiments for Wi-Fi communication, the FEM circuitry 1400 may be configured to operate in the 2.4 GHz frequency spectrum, the 5 GHz frequency spectrum, or the 6 GHz frequency spectrum. In these embodiments, the receive signal path of the FEM circuitry 1400 may include a receive signal path duplexer 1404 to separate the signals from each spectrum as well as provide a separate LNA 1406 for each spectrum as shown. In these embodiments, the transmit signal path of the FEM circuitry 1400 may also include a power amplifier 1410 and a filter 1412, such as a BPF, an LPF or another type of filter for each frequency spectrum and a transmit signal path duplexer 1404 to provide the signals of one of the different spectrums onto a single transmit path for subsequent transmission by the one or more of the antennas 1301 (FIG. 1D). In some embodiments, BT communications may utilize the 2.4 GHz signal paths and may utilize the same FEM circuitry 1400 as the one used for WLAN communications.

FIG. 1F illustrates radio IC circuitry 1506a in accordance with some embodiments. The radio IC circuitry 1306a is one example of circuitry that may be suitable for use as the WLAN or BT radio IC circuitry 1306a/1306b (FIG. 1D), although other circuitry configurations may also be suitable. Alternatively, the example of FIG. 1F may be described in conjunction with the example BT radio IC circuitry 1306b.

In some embodiments, the radio IC circuitry 1306a may include a receive signal path and a transmit signal path. The receive signal path of the radio IC circuitry 1306a may include at least mixer circuitry 1502, such as, for example, down-conversion mixer circuitry, amplifier circuitry 1506 and filter circuitry 1508. The transmit signal path of the radio IC circuitry 1306a may include at least filter circuitry 1512 and mixer circuitry 1514, such as, for example, up-conversion mixer circuitry. Radio IC circuitry 1306a may also include synthesizer circuitry 1504 for synthesizing a frequency 1505 for use by the mixer circuitry 1502 and the mixer circuitry 1514. The mixer circuitry 1502 and/or 1514 may each, according to some embodiments, be configured to provide direct conversion functionality. The latter type of circuitry presents a much simpler architecture as compared with standard super-heterodyne mixer circuitries, and any flicker interference brought about by the same may be alleviated for example through the use of OFDM modulation. FIG. 1F illustrates only a simplified version of a radio IC circuitry, and may include, although not shown, embodiments where each of the depicted circuitries may include more than one component. For instance, mixer circuitry 1514 may each include one or more mixers, and filter circuitries 1508 and/or 1512 may each include one or more filters, such as one or more BPFs and/or LPFs according to application needs. For example, when mixer circuitries are of the direct-conversion type, they may each include two or more mixers.

In some embodiments, mixer circuitry 1502 may be configured to down-convert RF signals 1407 received from the FEM circuitry 1304a-b (FIG. 1D) based on the synthesized frequency 1505 provided by synthesizer circuitry 1504. The amplifier circuitry 1506 may be configured to amplify the down-converted signals and the filter circuitry 1508 may include an LPF configured to remove unwanted signals from the down-converted signals to generate output baseband signals 1507. Output baseband signals 1507 may be provided to the baseband processing circuitry 1308a-b (FIG. 1D) for further processing. In some embodiments, the output baseband signals 1507 may be zero-frequency baseband signals, although this is not a requirement. In some embodiments, mixer circuitry 1502 may comprise passive mixers, although the scope of the embodiments is not limited in this respect.

In some embodiments, the mixer circuitry 1514 may be configured to up-convert input baseband signals 1511 based on the synthesized frequency 1505 provided by the synthesizer circuitry 1504 to generate RF output signals 1409 for the FEM circuitry 1304a-b. The baseband signals 1511 may be provided by the baseband processing circuitry 1308a-b and may be filtered by filter circuitry 1512. The filter circuitry 1512 may include an LPF or a BPF, although the scope of the embodiments is not limited in this respect.

In some embodiments, the mixer circuitry 1502 and the mixer circuitry 1514 may each include two or more mixers and may be arranged for quadrature down-conversion and/or up-conversion respectively with the help of synthesizer 1504. In some embodiments, the mixer circuitry 1502 and the mixer circuitry 1514 may each include two or more mixers each configured for image rejection (e.g., Hartley image rejection). In some embodiments, the mixer circuitry 1502 and the mixer circuitry 1514 may be arranged for direct down-conversion and/or direct up-conversion, respectively. In some embodiments, the mixer circuitry 1502 and the mixer circuitry 1514 may be configured for super-heterodyne operation, although this is not a requirement.

Mixer circuitry 1502 may comprise, according to one embodiment: quadrature passive mixers (e.g., for the in-phase (I) and quadrature phase (Q) paths). In such an embodiment, RF input signal 1407 from FIG. 1F may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1505 of synthesizer 1504 (FIG. 1F). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1407 (FIG. 1E) may comprise a balanced signal, although the scope of the embodiments is not limited in this respect. The I and Q baseband output signals may be provided to low-noise amplifier, such as amplifier circuitry 1506 (FIG. 1F) or to filter circuitry 1508 (FIG. 1F).

In some embodiments, the output baseband signals 1507 and the input baseband signals 1511 may be analog baseband signals, although the scope of the embodiments is not limited in this respect. In some alternate embodiments, the output baseband signals 1507 and the input baseband signals 1511 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1504 may be a fractional-N synthesizer or a fractional N/N+1 synthesizer, although the scope of the embodiments is not limited in this respect as other types of frequency synthesizers may be suitable. For example, synthesizer circuitry 1504 may be a delta-sigma synthesizer, a frequency multiplier, or a synthesizer comprising a phase-locked loop with a frequency divider. According to some embodiments, the synthesizer circuitry 1504 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1504 may be provided by a voltage-controlled oscillator (VCO), although that is not a requirement. A divider control input may further be provided by either of the baseband processing circuitry 1308a-b (FIG. 1D) depending on the desired output frequency 1505. In some embodiments, a divider control input (e.g., N) may be determined from a look-up table (e.g., within a Wi-Fi card) based on a channel number and a channel center frequency as determined or indicated by the example application processor 1310. The application processor 1310 may include, or otherwise be connected to, one of the example secure signal converter 101 or the example received signal converter 103 (e.g., depending on which device the example radio architecture is implemented in).

In some embodiments, synthesizer circuitry 1504 may be configured to generate a carrier frequency as the output frequency 1505, while in other embodiments, the output frequency 1505 may be a fraction of the carrier frequency (e.g., one-half the carrier frequency, one-third the carrier frequency). In some embodiments, the output frequency 1505 may be a LO frequency (fLO).

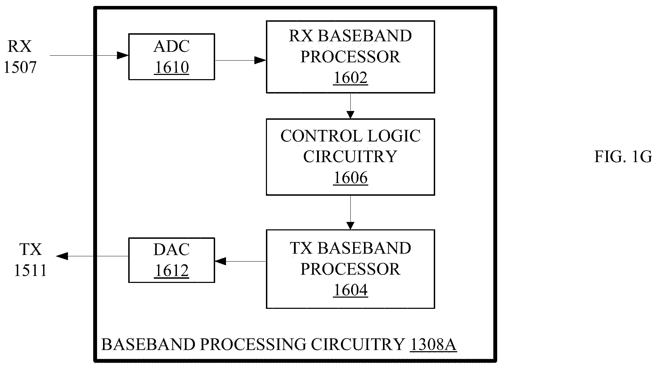

FIG. 1G illustrates a functional block diagram of baseband processing circuitry 1308a in accordance with some embodiments. The baseband processing circuitry 1308a is one example of circuitry that may be suitable for use as the baseband processing circuitry 1308a (FIG. 1D), although other circuitry configurations may also be suitable. Alternatively, the example of FIG. 1F may be used to implement the example BT baseband processing circuitry 1308b of FIG. 1D.

The baseband processing circuitry 1308a may include a receive baseband processor (RX BBP) 1602 for processing receive baseband signals 1509 provided by the radio IC circuitry 1306a-b (FIG. 1D) and a transmit baseband processor (TX BBP) 1604 for generating transmit baseband signals 1511 for the radio IC circuitry 1306a-b. The baseband processing circuitry 1308a may also include control logic 1606 for coordinating the operations of the baseband processing circuitry 1308a.

In some embodiments (e.g., when analog baseband signals are exchanged between the baseband processing circuitry 1308a-b and the radio IC circuitry 1306a-b), the baseband processing circuitry 1308a may include ADC 1610 to convert analog baseband signals 1609 received from the radio IC circuitry 1306a-b to digital baseband signals for processing by the RX BBP 1602. In these embodiments, the baseband processing circuitry 1308a may also include DAC 1612 to convert digital baseband signals from the TX BBP 1604 to analog baseband signals 1611.

In some embodiments that communicate OFDM signals or OFDMA signals, such as through baseband processor 1308a, the transmit baseband processor 1604 may be configured to generate OFDM or OFDMA signals as appropriate for transmission by performing an inverse fast Fourier transform (IFFT). The receive baseband processor 1602 may be configured to process received OFDM signals or OFDMA signals by performing an FFT. In some embodiments, the receive baseband processor 1602 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 1D, in some embodiments, the antennas 1301 (FIG. 1D) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1301 may each include a set of phased-array antennas, although embodiments are not so limited.

Although the radio architecture 1300 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 6^{th} generation mobile networks, 3GPP, long term evolution (LTE), LTE advanced, enhanced data rates for GSM Evolution (EDGE), or the like. Other embodiments may be used in various other devices, systems, and/or networks.

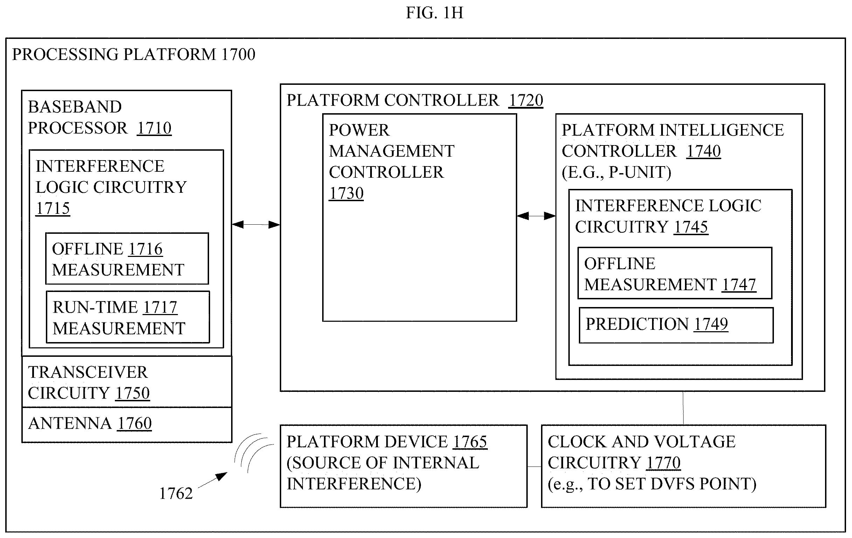

FIG. 1H illustrates an embodiment of a processing platform 1700 and communications between baseband processing circuitry (baseband processor 1710) of a wireless interface and a platform controller 1720 for STAs or MLDs, such as the STAs and MLDs in FIGs. 1A-C, to implement interference logic circuitry. The baseband processor 1710 may execute firmware or code for the interference logic circuitry 1715 from memory of a STA to measure offline and runtime interference and to mitigate internal interference 1762 via the platform controller 1720 for limited time frames. The interference logic circuitry 1715 of the baseband processor 1710 of the STA may measure interference 1762 on one or more channels used for communications during run-time via run-time logic circuitry 1717 of the interference logic circuitry 1715 and may determine to communicate a protect request command (protect request signal) to the platform controller 1720 to request that the platform controller 1720 protect the one or more channels from the internal interference 1762 while baseband controller 1710 has active communications on the one or more channels.

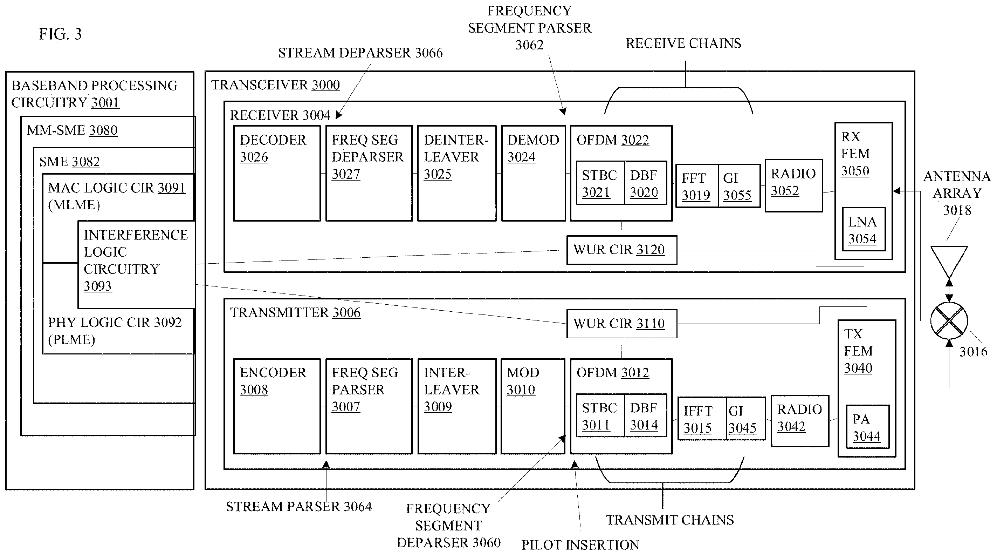

The internal interference 1762 may comprise electromagnetic energy received at the antenna 1760 and generated by the platform device 1765. For example, the platform device 1765 may operate at a clock frequency such as 2.4 GHz, which is a carrier frequency (or a harmonic of a carrier frequency) of active communications between the baseband processor 1710 and a remote device. The baseband processor 1710 may communicate via a transceiver circuitry 1750 (such as the transceiver 3000 shown in FIG. 3) and an antenna 1760. At least some of the electromagnetic energy generated by operations by the platform device 1765 at the clock frequency may impinge the antenna 1760 causing interference in the active communications between the baseband processor 1710 and the remote device. Furthermore, the clock and voltage circuitry 1770 may provide a clock frequency and voltage to the platform device 1765 for clocking the operations of the platform device 1765 at a DVFS point selected by the platform intelligence controller 1740.

In response to a protect request command for the STA, the interference logic circuitry 1745 of the platform intelligence controller 1740 may determine that the DDR or LPDDR causes the interference on active channels or links of the STA by referencing interference data or patterns stored in memory of the STA. To limit the time frame of protection of the one or more channels, the interference logic circuitry 1715 of the baseband processor 1710 may send an unprotect command signal to the platform controller 1720. For instance, the STA of the baseband processor 1710 may regularly enter PS modes based on an 802.11 protocol, during which the baseband processor 1710 is not expected to receive any data packets via communication channels. Based on the PS modes, the interference logic circuitry 1715 may inform the power management controller (PMC) 1730 of the platform controller 1720 when STA is in entering the sleep (PS mode) cycle and the duration of the sleep cycle. During the sleep cycle, the PMC 1730 may signal and unprotect command (unprotect signal) to platform intelligence controller 1740 (e.g., a P-unit) to release a DVFS point for the duration of sleep cycle to align the PS mode with protection requests for the STA of the baseband processor 1710.

The following example is given to explain an embodiment of aligning the PS mode with requesting protection and signaling unprotect commands. Assume STA uses a delivery traffic indication map (DTIM) interval of 500 milliseconds (msec), meaning that every 500 msec, the STA wakes up to receive beacons, and check if there is a packet to receive, the STA stays awake for 60 msec of individual target wake time (TWT) window before going back to sleep. To reduce the frequency of signaling between STA and the platform intelligence controller 1740, the baseband processor 1710 signals platform intelligence controller 1740 that:
1. From now till the next signal, consider the STA is awake only 60 msec out of 500 msec cycle. Therefore, the platform intelligence controller 1740 would know for the next 60 msec, DVFS has to skip a memory point, but for 500-60 = 440 msec the platform intelligence controller 1740 can choose any DVFS point. Then again, for 60 msec skip DVFS point, 500-60 = 440 msec free to choose any DVFS point, and so on.
2. After 100 msec or 3 seconds or so, the baseband processor 1710 signals to terminate the above mode or signals a new sleep cycle.

In addition, when the interference logic circuitry 1715 of the baseband processor 1710 determines that its communication is limited to a primary channel or any part of the band that is not impacted by DDR interference, the interference logic circuitry 1715 will send unprotect command (signal) to the platform intelligence controller 1740 to release DVFS point.

Note that some embodiments may also be aligned with the current sleep/active notifications on an Inter Processor Communication (IPC) channel between baseband processor 1710 and the PMC 1730 as stated below, meaning that the protect/un-protect command signals are sent when the IPC operation is allowed.

In current embodiment, the baseband processor 1710 receives Sleep/Active notifications from the PMC 1730, over the IPC channel. The baseband processor 1710 may communicate with the PMC 1730 of the platform controller 1720 to allow the use of certain memory speeds during an unprotect period and to disallow certain memory speeds during a protect period.

In some embodiments, the baseband processor 1710 can communicate a protect command (signal) to platform controller 1720 when performing background scanning on channels that can be impacted by DDR frequency.

Note that such embodiments are not limited to interference from DDR but may perform similar operations in response to internal interference from any platform device internal or externally connected to the platform or a platform bus such as a USB drive or other USB device.

In the present embodiment, the interference logic circuitry 1745 of the platform intelligence controller 1740 comprises offline measurement logic circuitry 1747 and prediction logic circuitry 1749 and the interference logic circuitry 1715 comprises offline logic circuitry 1716 and run-time measurement logic circuitry 1717. The offline measurement logic circuitry 1747 of the interference logic circuitry 1745 may perform offline measurements of interference 1762 caused by one or more platform devices such as the platform device 1765 to generate the predetermined interference patterns or data for storage in memory of the processing platform 1700. For instance, the manufacturer of the processing platform 1700 may place the processing platform 1700 in a shielded box or otherwise shield the processing platform 1700 to prevent external sources of electromagnetic radiation from causing interference on communication channels associated with one or more antennas of the processing platform 1700 such as the antenna 1760. The offline measurement logic circuitry 1745 may operate one or more platform devices such as the platform device 1765 under different workloads and at different clock frequencies to allow the offline measurement logic circuitry 1716 of the baseband processor 1710 to take measurements of the interference detected on various communication channels. With these offline measurements, the offline measurement logic circuitry 1745 can associate interference patterns on each communications channel with amplitudes of interference at each of the workloads for each of the platform devices to generate the predetermined interference patterns or data for storage in memory of the processing platform 1700. In some embodiments, the predetermined interference patterns may be stored at a predefined address in memory dedicated for storage of the predetermined interference patterns.

The prediction logic circuitry 1749 may access the predetermined interference patterns or data for storage in memory of the processing platform 1700 during run-time, in response to a protect request signal from the interference logic circuitry of the baseband processor 1710 to predict which platform device is causing interference on one or more active channels of wireless communications. For instance, the interference logic circuitry 1745 of the platform controller 1720 may know or receive an indication of the active channels for which the interference logic circuitry of the baseband processor 1710 is requesting protection and determine one or more platform devices that cause interference on the active channels to predict the one or more platform devices that are currently causing interference on the active channels. In some embodiments, the platform controller 1720 may the platform controller 1720 may determine one or more platform devices that cause interference on the active channels, determine the workloads the one or more platform devices that cause interference on the active channels, and determine the levels of interference caused by the one or more platform devices at the current workloads of the one or more platform devices to predict the one or more platform devices that are currently causing interference on the active channels.

In some embodiments, if the prediction logic circuitry 1749 identifies more than one platform devices as the potential source of interference, the prediction logic circuitry 1749 may select, via a prediction algorithm, one or more of the platform devices and change the clock frequencies of the one or more of the platform devices to protect the active communication channels,

The run-time measurement logic circuitry 1717 of the interference logic circuitry 1715 may perform run-time measurements of internal interference, store interference data or patterns of the interference in memory, and communicate a protect request signal to the platform controller 1740 to protect active communication channels.

Note that while the embodiments discussed in conjunction with FIG. 1H show particular locations for the interference logic circuitry 1715 and 1740, the logic circuitry can reside in any memory accessible to a processor and that processor can perform the functionality for the interference logic circuitry 1715 and 1740 by coordinating the operations of the platform controller 1710 and the baseband processor 1710 via available communication media such as one or more buses, one or more high-speed interconnects, other platform devices (such as the PMC 1730), a combination thereof, and/or the like. For instance, the interference logic circuitry may reside on a chipset that includes the PMC 1730.

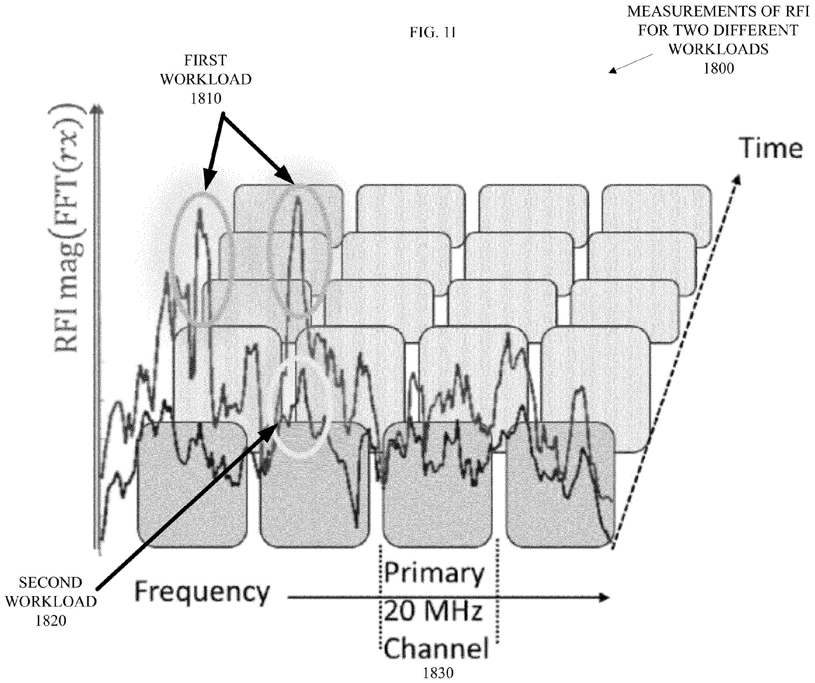

FIG. 1I illustrates an embodiment for measurement of internal interference of a platform on wireless communications channels during run-time for STAs or MLDs, such as the STAs and MLDs in FIGs. 1A-C, to implement interference logic circuitry. Platform interference which varies per model and design of a platform can be characterized pre-production using the data measured by original equipment manufacturer (OEM) customer using, e.g., a noise diagnostic tool (NDT). Such a platform-specific data can be stored on the platform in a dedicated OEM-specific memory location. Depending on the workload and utilization of DDR (or any other internal interference generating device), the interference logic circuitry of the wireless communications device can evaluate the strength and location of the potential interference against the Wi-Fi operating channel. Then, the interference logic circuitry of the wireless communications device identifies which parts of the channel are susceptible to performance degradation because of the internal platform interference.

To explain this, the example 1800 is shown in FIG. 1I where in an 80 MHz channel the radio frequency (RF) interference (RFI) is measured for two different workloads identified by a first workload 1810 curve and a second workload 1820 curve imposed on channels of a frequency bandwidth. The first workload 1810 curve represents a memory intensive workload such as video editing, while second workload 1820 curve represents a workload like background email update. The interference logic circuitry of the wireless communications device obtains the information on the workloads from platform indicators or applications such as an Intel^{®} Connectivity Performance Suite (ICPS). The interference logic circuitry of the wireless communications device identifies whether the interference impacts primary channel 1830 and control channel. Further, the interference logic circuitry of the wireless communications device can identify the impact in the granularity of Resource Units (RUs) that are susceptible to interference as shown by circles about the first workload 1810 curve and the second workload 1820 curve. Depending on the operating signal-to-noise ratio (SNR), the interference logic circuitry of the wireless communications device may ignore the presence of the weak interference shown by circle about the second workload 1820 curve or if the device is distanced from AP and SNR is low, then even interference of the second workload 1820 curve may warrant a request for protection from a platform controller.

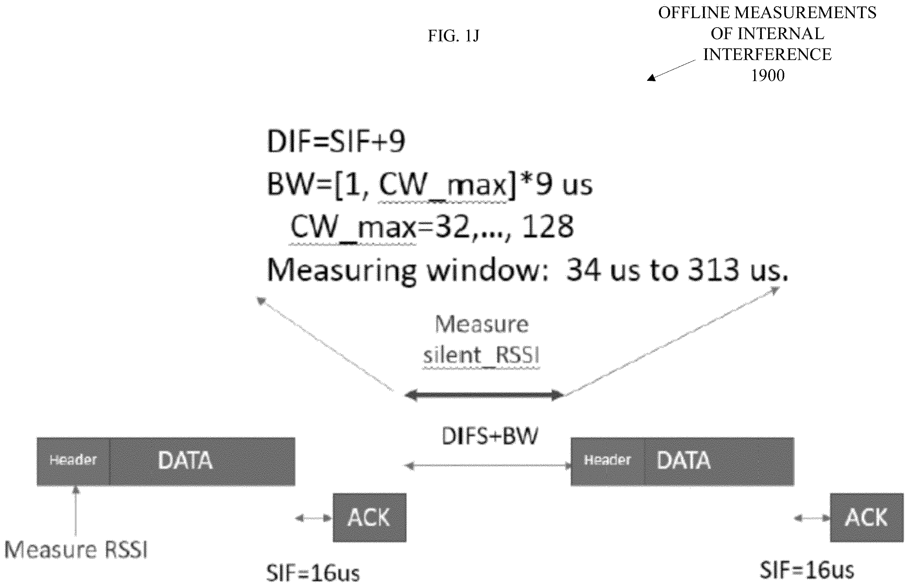

FIG. 1J illustrates an embodiment for offline measurement 1900 of internal interference of a platform on wireless communications channels for STAs or MLDs, such as the STAs and MLDs in FIGs. 1A-C, to implement interference logic circuitry. Platform interference may be measured and characterized offline using tools such as an Intel Noise Diagnostic tool (NDT). The NDT data can also be combined and polished by in-lab measurements using spectrum analyzer and other similar lab equipment. With the NDT, an OEM customer may measure Wi-Fi de-sense values. OEM customers may upload the measurement results into a database such as an Athena database. The data from the database may also utilized for characterization of platform-specific interference data and a compressed form of such data can be stored on a pre-defined storage at the platform to be read during run-time. Furthermore, the interference logic circuitry of a STA may measure RF interference between packets to estimate interference. The offline and run-time interference data combined with statistics/indicators from platform devices such as a DDR on memory load and other platform components, such as high-speed I/O, may be used to identify and characterize run-time interference.

FIGs. 2A-2C illustrate embodiments of channels and subchannels (or resource units) that can facilitate multiple transmissions simultaneously such as a EHT PPDU. FIG. 2A illustrates an embodiment of transmissions 2010 between four stations and an AP on four different subchannels (or resource units) of a channel via OFDMA. Grouping subcarriers into groups of resource units is referred to as subchannelization. Subchannelization defines subchannels that can be allocated to stations depending on their channel conditions and service requirements. An OFDMA system may also allocate different transmit powers to different subchannels.

In the present embodiment, the OFDMA STA1, OFDMA STA2, OFDMA STA3, and OFDMA STA4 may represent transmissions on a four different subchannels of the channel. For instance, transmissions 2010 may represent an 80 MHz channel with four 20 MHz bandwidth PPDUs using frequency division multiple access (FDMA). Such embodiments may include, e.g., 1 PPDU per 20 MHz bandwidth, 2 PPDU in a 40 MHz bandwidth, and 4 PPDUs in an 80 MHz bandwidth. As a comparison, FIG. 2B illustrates an embodiment of an orthogonal frequency division multiplexing (OFDM) transmission 2015 for the same channel as FIG. 2A. The OFDM transmission 2015 may use the entire channel bandwidth.

FIG. 2C illustrates an embodiment of a 20-Megahertz (MHz) bandwidth 2020 on a channel that illustrates different resource unit (RU) configurations 2022, 2024, 2026, and 2028. In OFDMA, for instance, an OFDM symbol is constructed of subcarriers, the number of which is a function of the physical layer protocol data unit (PPDU) (also referred to as the PHY frame) bandwidth. There are several subcarrier types: 1) Data subcarriers which are used for data transmission; 2) Pilot subcarriers which are utilized for phase information and parameter tracking; and 3) unused subcarriers which are not used for data/pilot transmission. The unused subcarriers are the direct current (DC) subcarrier, the Guard band subcarriers at the band edges, and the Null subcarriers.

The RU configuration 2022 illustrates an embodiment of nine RUs that each include 26 tones (or subcarriers) for data transmission including the two sets of 13 tones on either side of the DC. The RU configuration 2024 illustrates the same bandwidth divided into 5 RUs including four RUs with 52 tones and one RU with 26 tones about the DC for data transmission. The RU configuration 2026 illustrates the same bandwidth divided into 3 RUs including two RUs with 106 tones and one RU with 26 tones about the DC for data transmission. And the RU configuration 2028 illustrates the same bandwidth divided into 2 RUs including two RUs with 242 tones about the DC for data transmission. Embodiments may be capable of additional or alternative bandwidths such as such as 40 MHz, 80 MHz, 160 MHz, 240 MHz, and 320 MHz.

Many embodiments support RUs of 26-tone RU, 52-tone RU, 106-tone RU, 242-tone RU, 484-tone RU, 996-tone RU, 2x996-tone RU, and 4x996-tone RU. In some embodiments, RUs that are the same size or larger than 242-tone RUs are defined as large size RUs and RUs that are smaller than 242-tones RUs are defined as small size RUs. In some embodiments, small size RUs can only be combined with small size RUs to form small size MRUs. In some embodiments, large size RUs can only be combined with large size RUs to form large size MRUs.

FIG. 2D illustrates an embodiment of a HE MU PPDU 2100 in the form of an 802.11, orthogonal frequency division multiple access (OFDMA) packet on a 20 MHz channel of, e.g., a 2.4 GHz link, a 5 GHz link, a 6 GHz link, or any other frequency. In some embodiments, the baseband processing circuitry, such as the baseband processing circuitry 1218 in FIG. 1C, may transmit a HE MU PPDU 2100 transmission on the 6 GHz carrier frequency, optionally with beamforming. In some embodiments, the HE MU PPDU 2100 may comprise a MAC association request or response frame, an MAC reassociation request or response frame, a MAC authentication frame, and/or the like.

The HE MU PPDU 2100 may comprise a legacy preamble 2110 to notify other devices in the vicinity of the source STA, such as an AP STA, that the 20 MHz channel is in use for a duration included in the legacy preamble 2110. The legacy preamble 2110 may comprise one or more short training fields (L-STFs), one or more long training fields (L-LTFs), and one or more signal fields (L-SIG and RL-SIG).

The HE MU PPDU 2100 may also comprise a HE preamble 2120 to identify a subsequent 6 GHz carrier link transmission as well as the STAs that are the targets of the transmission. Similarly, the HE preamble 2120 may comprise one or more short training fields (HE-STFs), one or more long training fields (HE-LTFs), and one or more signal fields (HE-SIG).

After the HE preamble 2120, the HE MU PPDU 2100 may comprise a data portion 2140 that includes a single user (SU) or multiple user (MU) packet. FIG. 2D illustrates the MU packet with four designated RUs. Note that the number and size of the RUs may vary between packets based on the number of target STAs and the types of payloads in the data portions 2140.

FIG. 2E depicts another embodiment of the MAC Management frame in the HE MU PPDU 2200. In some embodiments, the HE MU PPDU 2200 may be a frame format used for a DL transmission to one or more STAs. In the HE MU PPDU 2200, the MAC management frame may comprise two legacy (L) short training fields (STFs) with an 8 microseconds duration each, a legacy (L) signal (SIG) field with a four-microsecond duration, a repeated, legacy signal field (RL-SIG) with a 4-microsecond duration, and a U-SIG with 2 symbols having a 4 microsecond duration each. The HE MU PPDU 2200 format may also comprise a HE signal field (HE-SIG) with 2 symbols at 4 microseconds each, an HE STF, a number of HE-LTFs, a data field, and a packet extension (PE) field. In some embodiments, the data field may comprise may be a MAC management frame.

As illustrated in FIG. 2F, the data field of the HE MU PPDU 2200 may comprise a MAC management frame 2210 such as a MAC association request or response frame, an MAC reassociation request or response frame, a MAC TID-to-Link mapping request/response frame, a disassociation frame, and/or the like. The data field may comprise an MPDU (PSDU) such as a MAC (re)association request frame, (re)association response frame, disassociation frame, or a TID-to-Link mapping request or response frame comprising a recipient MAC address or recipient ID field in the MAC header (frame header) to identify a non-collocated AP MLD as a recipient of the MAC reassociation request frame, disassociation frame, or a TID-to-Link mapping request or response frame. The MAC authentication frame may not include the recipient MAC address or recipient ID field in the MAC header.

In some embodiments, the MAC association request and response frames and/or reassociation request and response frames may comprise an add links field to include a value of a flag to indicate that the association request frames and/or reassociation request frames request frame requests a setup or addition of links and does not request changing current links associated with the non-AP MLD that transmits the association request frames and/or reassociation request frames. The add links field may reside in a subfield of the frame control field of the frame header, a field of the frame header, or a field of the frame body. For example, the add links field may include one bit set to a logical value of one to indicate that the request only adds links and does not change current links. The add links field may include one bit set to a logical value of zero to indicate that the request is not an adds links only request. The add links field may reside in the association response frames and/or reassociation response frames to indicate that the response frame is responsive to a request to add links only (e.g., logical 1) or is not responsive to an add links only request (e.g., logical 0). In other embodiments, the flag value is a logical 0 to indicate that the response frame is responsive to a request to add links only or a logical 1 to indicate that the response frame is not responsive to an add links only request.

In some embodiments, the MAC association request and response frames, reassociation request and response frames, and/or disassociation frames, may comprise a remove links field to include a value of a flag to indicate that the association request frames, reassociation request frames and/or disassociation frames, request a removal or deletion of links and does not request changing other current links associated with the non-AP MLD that transmits the association request frames and/or reassociation request frames. The remove links field may reside in a subfield of the frame control field of the frame header, a field of the frame header, or a field of the frame body. For example, the remove links field may include one bit set to a logical value of one to indicate that the request only remove links identified and does not change other current links. The remove links field may include one bit set to a logical value of zero to indicate that the request is not a remove links only request. The remove links field may reside in the association response frames, reassociation response frames, and/or disassociation frames to indicate that the response frame is responsive to a request to remove links only (e.g., logical 1) or is not responsive to a remove links only request (e.g., logical 0). In other embodiments, the flag value is a logical 0 to indicate that the response frame is responsive to a request to remove links only or a logical 1 to indicate that the response frame is not responsive to a remove links only request.

The MAC reassociation request frame or a TID-to-Link mapping request or response frame may include a 2 octet frame control field, a 2 octet duration field, a 6 octet address 1 field, a 6 octet address 2 field, a 6 octet address 3 field, a 2 octet sequence control field, a 0 or 4 octet high-throughput (HT) control field, and the recipient MAC address or recipient ID field in the MAC header. MAC association request frame or a TID-to-Link mapping request or response frame may also include a variable length frame body field, and a 4-octet frame check sequence field comprising a value, such as a 32-bit cyclic redundancy code (CRC), to check the validity of and/or correct preceding frame.

The Duration field may be the time, in microseconds, required to transmit the pending management frame, plus, in some embodiments, one acknowledgement (ack) frame and one or more short interframe spaces (SIFSs). If the calculated duration includes a fractional microsecond, that value may be rounded up to the next higher integer.

The address 1 field of the MAC association request frame or a TID-to-Link mapping request or response frame may comprise the address of the intended receiver such as an AP STA of an AP MLD of a non-collocated AP MLD. The address 2 field may be the address the transmitter such as a non-AP MLD that transmitted the MAC association request frame or a TID-to-Link mapping request or response frame. The address 3 field may be the basic service set identifier (BSSID) of the AP MLD of the non-collocated AP MLD.

The HT control field may be present in management frames as determined by the +HTC subfield of the frame control field.

The recipient MAC address or recipient ID field may include a MAC address associated with the non-collocated AP MLD, a MLD ID associated with the non-collocated AP MLD, or a flag such as one or more bits to identify the non-collocated AP MLD as a recipient of the MAC association request frame or a TID-to-Link mapping request or response frame.

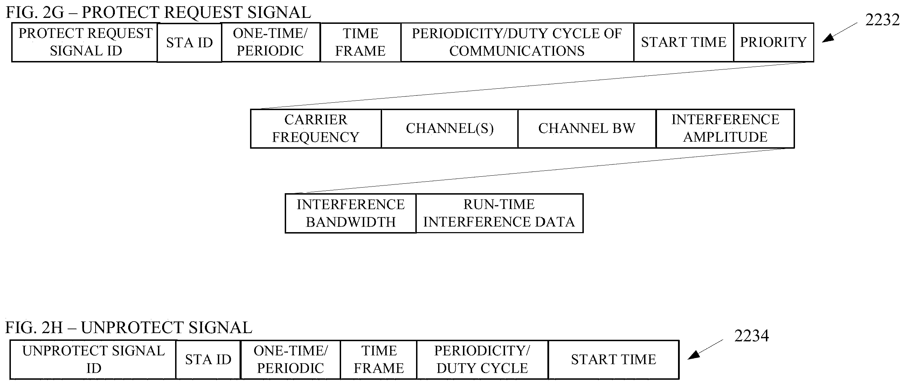

The frame body may include one or more fields and/or elements such as the fields and/or elements depicted in FIGs. 2G-2M. The frame check sequence (FCS) field may include a sequence of bits such as a 32-bit cyclic redundancy check (CRC).

FIG. 2G depicts an embodiment of a frame body 2232 of a protect request signal. The frame body 2232 format may include one or more other fields and/or elements along with a protect request signal ID to identify a command, a STA ID to identify the station associated with the request, a one-time/periodic value to identify if the protection is one-time or periodic, a time frame value to indicate a time frame for the protection, a periodicity/duty cycle of communications value to indicate the periodicity or duty cycle of the active communications, a start time value for the active communications, and a priority value to indicate a priority of the active communications. In some embodiments, the protect request signal may also comprise one or more other fields and/or elements including a carrier frequency for the active communication, identifiers for one or more channels, a channel bandwidth value for the active communications, an interference amplitude value of the interference, an interference bandwidth value of the interference, and run-time interference data or an indication of a memory location that stores the run-time interference data.

In some embodiments, one or more of these fields may be included in the protect request signal. In other embodiments, all these fields may be included in the protect request signal.

FIG. 2H depicts an embodiment of a frame body 2234 of an unprotect signal. The frame body 2234 format may include one or more other fields and/or elements along with an unprotect signal ID to identify a command, a STA ID to identify the station associated with the command, a one-time/periodic value to identify if the protection is one-time or periodic, a time frame value to indicate a time frame for the command, a periodicity/duty cycle of communications value to indicate the periodicity or duty cycle of the unprotected time frame, and a start time value for the unprotected time frame.

In some embodiments, one or more of these fields may be included in the unprotect signal. In other embodiments, all these fields may be included in the unprotect signal. In many embodiments, the unprotect signal may identify a PS mode for the STA associated with the STA ID.

FIGs. 2I-J illustrates an example of a PPDU 2260 with a MAC management frame that may be transmitted by an MLD STA to an AP MLD. In FIG. 2I, the PPDU 2260 format may be used for a transmission of an association frame, a reassociation frame, or an TID-to-Link mapping frame, either as a request frame or a response frame.

The PPDU 2260 format may comprise an OFDM PHY preamble, an OFDM PHY header, a PSDU, tail bits, and pad bits. The PHY header may contain the following fields: length, rate, a reserved bit, an even parity bit, and the service field. in terms of modulation, the length, rate, reserved bit, and parity bit (with 6 zero tail bits appended) may constitute a separate single OFDM symbol, denoted signal, which is transmitted with the combination of BPSK modulation and a coding rate of R = 1/2.

The PSDU (with 6 zero tail bits and pad bits appended), denoted as data, may be transmitted at the data rate described in the rate field and may constitute multiple OFDM symbols. The tail bits in the signal symbol may enable decoding of the rate and length fields immediately after reception of the tail bits. The rate and length fields may be required for decoding the data field of the PPDU.

In FIG. 2J, the data field of the PPDU may comprise an MPDU such as a MAC management frame 2270. The MAC management frame 2270 may include a 2-octet frame control field, a 2-octet duration field, a 6 octet RA field, and a 4-octet frame check sequence field comprising a value, such as a 32-bit CRC, to check the validity of and/or correct preceding frame.

In several embodiments, the value of the addr1 field of the MAC management frame is set to the recipient address (RA) of the MAC management frame 2270 such as a collocated AP MLD affiliated with a non-collocated AP MLD.

FIG. 3 depicts an embodiment of an apparatus to generate, transmit, receive, and interpret or decode PHY frames and MAC frames. The apparatus comprises a transceiver 3000 coupled with baseband processing circuitry 3001. The baseband processing circuitry 3001 may comprise a MM-SME 3080, a SME 3082, a MAC logic circuitry 3091 (comprising a MLME), and PHY logic circuitry 3092 (comprising a PLME), as well as interference logic circuitry 3093. In other embodiments, the baseband processing circuitry 3001 may be included on the transceiver 3000. While the interference logic circuitry 3093 is shown as part of the MAC logic circuitry 3091 and the PHY logic circuitry 3092, in some embodiments, the interference logic circuitry 3093 may comprise part of the MM-SME 3080, SME 3082 (for each STA of the MLD), MLME (for each STA of the MLD), PLME (for each STA of the MLD), or a combination thereof. In other embodiments, if the apparatus comprises a single STA (not an MLD), the apparatus may not include the MM-SME 3080.

The MAC logic circuitry 3091 and PHY logic circuitry 3092 may comprise code executing on processing circuitry of a baseband processing circuitry 3001; circuitry to implement operations of functionality of the MAC or PHY; or a combination of both. In the present embodiment, the MAC logic circuitry 3091 and PHY logic circuitry 3092 may comprise interference logic circuitry.

The MAC logic circuitry 3091 may determine a frame such as a MAC management frame and the PHY logic circuitry 3092 may determine the physical layer protocol data unit (PPDU) by prepending the frame, also called a MAC protocol data unit (MPDU), with a physical layer (PHY) preamble for transmission of the MAC management frame via the antenna array 3018. The PHY logic circuitry 3092 may cause transmission of the MAC management frame in the PPDU.

The transceiver 3000 comprises a receiver 3004 and a transmitter 3006. Embodiments have many different combinations of modules to process data because the configurations are deployment specific. FIG. 3 illustrates some of the modules that are common to many embodiments. In some embodiments, one or more of the modules may be implemented in circuitry separate from the baseband processing circuitry 3001. In some embodiments, the baseband processing circuitry 3001 may execute code in processing circuitry of the baseband processing circuitry 3001 to implement one or more of the modules.

In the present embodiment, the transceiver 3000 also includes WUR circuitry 3110 and 3120. The WUR circuitry 3110 may comprise circuitry to use portions of the transmitter 3006 (a transmitter of the wireless communications I/F such as wireless communications I/Fs 1216 and 1246 of FIG. 1C) to generate a WUR packet. For instance, the WUR circuitry 3110 may generate, e.g., an OOK signal with OFDM symbols to generate a WUR packet for transmission via the antenna array 3018. In other embodiments, the WUR may comprise an independent circuitry that does not use portions of the transmitter 3006.

Note that a MLD such as the AP MLD 1210 in FIG. 1C may comprise multiple transmitters to facilitate concurrent transmissions on multiple contiguous and/or non-contiguous carrier frequencies.

The transmitter 3006 may comprise one or more of or all the modules including an encoder 3008, a stream deparser 3066, a frequency segment parser 3007, an interleaver 3009, a modulator 3010, a frequency segment deparser 3060, an OFDM 3012, an Inverse Fast Fourier Transform (IFFT) module 3015, a GI module 3045, and a transmitter front end 3040. The encoder 3008 of transmitter 3006 receives and encodes a data stream destined for transmission from the MAC logic circuitry 3091 with, e.g., a binary convolutional coding (BCC), a low-density parity check coding (LDPC), and/or the like. After coding, scrambling, puncturing and post-FEC (forward error correction) padding, a stream parser 3064 may optionally divide the data bit streams at the output of the FEC encoder into groups of bits. The frequency segment parser 3007 may receive data stream from encoder 3008 or streams from the stream parser 3064 and optionally parse each data stream into two or more frequency segments to build a contiguous or non-contiguous bandwidth based upon smaller bandwidth frequency segments. The interleaver 3009 may interleave rows and columns of bits to prevent long sequences of adjacent noisy bits from entering a BCC decoder of a receiver.

The modulator 3010 may receive the data stream from interleaver 3009 and may impress the received data blocks onto a sinusoid of a selected frequency for each stream via, e.g., mapping the data blocks into a corresponding set of discrete amplitudes of the sinusoid, or a set of discrete phases of the sinusoid, or a set of discrete frequency shifts relative to the frequency of the sinusoid. In some embodiments, the output of modulator 3010 may optionally be fed into the frequency segment deparser 3060 to combine frequency segments in a single, contiguous frequency bandwidth of, e.g., 320 MHz. Other embodiments may continue to process the frequency segments as separate data streams for, e.g., a non-contiguous 160+160 MHz bandwidth transmission.

After the modulator 3010, the data stream(s) are fed to an OFDM 3012. The OFDM 3012 may comprise a space-time block coding (STBC) module 3011, and a digital beamforming (DBF) module 3014. The STBC module 3011 may receive constellation points from the modulator 3010 corresponding to one or more spatial streams and may spread the spatial streams to a greater number of space-time streams. Further embodiments may omit the STBC.

The OFDM 3012 impresses or maps the modulated data formed as OFDM symbols onto a plurality of orthogonal subcarriers, so the OFDM symbols are encoded with the subcarriers or tones. The OFDM symbols may be fed to the DBF module 3014. Generally, digital beam forming uses digital signal processing algorithms that operate on the signals received by, and transmitted from, an array of antenna elements. Transmit beamforming processes the channel state to compute a steering matrix that is applied to the transmitted signal to optimize reception at one or more receivers. This is achieved by combining elements in a phased antenna array in such a way that signals at particular angles experience constructive interference while others experience destructive interference.

The IFFT module 3015 may perform an inverse discrete Fourier transform (IDFT) on the OFDM symbols to map on the subcarriers. The guard interval (GI) module 3045 may insert guard intervals by prepending to the symbol a circular extension of itself. The GI module 3045 may also comprise windowing to optionally smooth the edges of each symbol to increase spectral decay.

The output of the GI module 3045 may enter the radio 3042 to convert the time domain signals into radio signals by combining the time domain signals with subcarrier frequencies to output into the transmitter front end module (TX FEM) 3040. The transmitter front end 3040 may comprise a with a power amplifier (PA) 3044 to amplify the signal and prepare the signal for transmission via the antenna array 3018. In many embodiments, entrance into a spatial reuse mode by a communications device such as a station or AP may reduce the amplification by the PA 3044 to reduce channel interference caused by transmissions.

The transceiver 3000 may also comprise duplexers 3016 connected to antenna array 3018. The antenna array 3018 radiates the information bearing signals into a time-varying, spatial distribution of electromagnetic energy that can be received by an antenna of a receiver. In several embodiments, the receiver 3004 and the transmitter 3006 may each comprise its own antenna(s) or antenna array(s).

The transceiver 3000 may comprise a receiver 3004 for receiving, demodulating, and decoding information bearing communication signals. The receiver 3004 may comprise a receiver front-end module (RX FEM) 3050 to detect the signal, detect the start of the packet, remove the carrier frequency, and amplify the subcarriers via a low noise amplifier (LNA) 3054 to output to the radio 3052. The radio 3052 may convert the radio signals into time domain signals to output to the GI module 3055 by removing the subcarrier frequencies from each tone of the radio signals.

The receiver 3004 may comprise a GI module 3055 and a fast Fourier transform (FFT) module 3019. The GI module 3055 may remove the guard intervals and the windowing and the FFT module 3019 may transform the communication signals from the time domain to the frequency domain.

The receiver 3004 may also comprise an OFDM 3022, a frequency segment parser 3062, a demodulator 3024, a deinterleaver 3025, a frequency segment deparser 3027, a stream deparser 3066, and a decoder 3026. An equalizer may output the weighted data signals for the OFDM packet to the OFDM 3022. The OFDM 3022 extracts signal information as OFDM symbols from the plurality of subcarriers onto which information-bearing communication signals are modulated.

The OFDM 3022 may comprise a DBF module 3020, and an STBC module 3021. The received signals are fed from the equalizer to the DBF module 3020. The DBF module 3020 may comprise algorithms to process the received signals as a directional transmission directed toward to the receiver 3004. And the STBC module 3021 may transform the data streams from the space-time streams to spatial streams.

The output of the STBC module 3021 may enter a frequency segment parser 3062 if the communication signal is received as a single, contiguous bandwidth signal to parse the signal into, e.g., two or more frequency segments for demodulation and deinterleaving.

The demodulator 3024 demodulates the spatial streams. Demodulation is the process of extracting data from the spatial streams to produce demodulated spatial streams. The deinterleaver 3025 may deinterleave the sequence of bits of information. The frequency segment deparser 3027 may optionally deparse frequency segments as received if received as separate frequency segment signals or may deparse the frequency segments determined by the optional frequency segment parser 3062. The decoder 3026 decodes the data from the demodulator 3024 and transmits the decoded information, the MPDU, to the MAC logic circuitry 3091.

The MAC logic circuitry 3091 may parse the MPDU based upon a format defined in the communications device for a frame to determine the particular type of frame by determining the type value and the subtype value. The MAC logic circuitry 3091 may then interpret the remainder of MPDU.

While the description of FIG. 3 focuses primarily on a single spatial stream system for simplicity, many embodiments are capable of multiple spatial stream transmissions and use parallel data processing paths for multiple spatial streams from the PHY logic circuitry 3092 through to transmission. Further embodiments may include the use of multiple encoders to afford implementation flexibility.

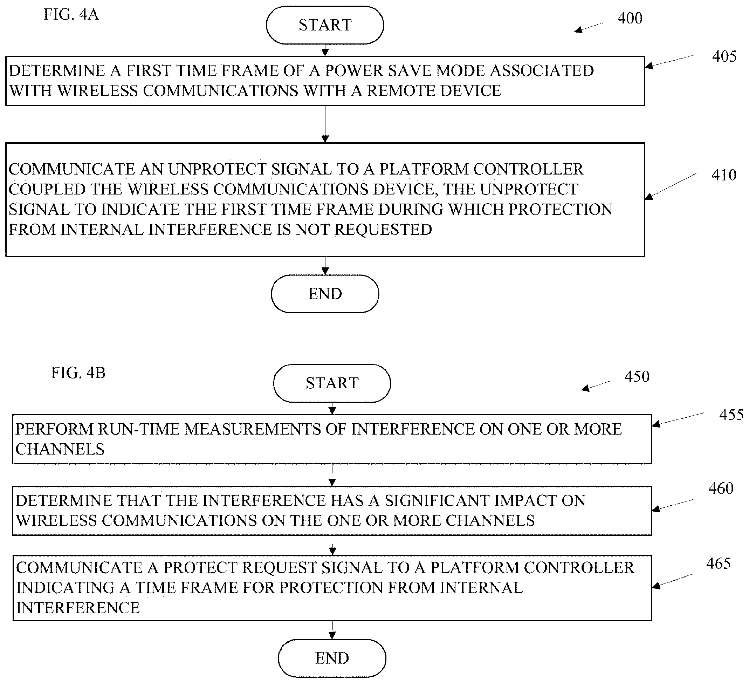

FIG. 4A depicts an embodiment of a flowchart of a process 400 to implement interference logic circuitry such as the interference logic circuitry discussed in FIGs. 1-3. At element 405, interference logic circuitry of a wireless communication device (e.g., the interference logic circuitry 1250 of the MLD 1230) may determine a first time frame of a power save mode. The power save mode may be associated with wireless communications with a remote device. The first time frame may be a value of the duration of time during which the wireless communication device does not actively communicate with the remote device so the wireless communication device does not expect to transmit or receive communications on the communication channel(s). As a result, any interference on the communication channels will not affect active communications for the wireless communication device.

After determining the first time frame, the wireless communication device may communicate an unprotect signal (via internal platform wiring) to a platform controller coupled with the wireless communications device, the unprotect signal to indicate the first time frame during which protection from internal interference is not requested (element 410). In some embodiments, the wireless communication device may use the PS mode to save power. For instance, the wireless communication device may operate on battery power and the PS mode may allow the wireless communication device to conserve power instead of remaining active constantly when communications with the remote device are not needed. During the PS mode, the wireless communication device may not expect to receive communications from, e.g., an access point with which the wireless communication device is associated.

In some embodiments, the wireless communication device may use the time frame of the PS mode for scanning. For instance, the scanning procedure is needed to find suitable AP to maintain good connection in different situations such as a connection lost "emergency" situation, an energy-based scan situation, and a roaming, background, and user-triggered scan situation.

The connection lost "Emergency" scan may occurs when Wi-Fi connection with the remote device is suddenly lost. In this case, the wireless communication device may quickly find an alternative channel with an alternative remote device such as an access point or a peer-to-peer device and to establish a connection with the alternative remote device to reestablish communications for a user of the wireless communication device.

Since a connection is needed even at low signal to noise ratio (SNR), it would be important to receive beacons and probe-responses even at low SNRs, therefore, the wireless communication device may protect channel by sending a protect request signal to a platform controller when a potential platform interference exists.

The energy-based scan may be a less costly scan in terms of energy expenditure and time that may be used to quickly identify any one or more channels in which an alternative remote device operates. For instance, the wireless communication device may use the energy-based scan to quickly generate a list of channels on which one or more other remote devices operate. Assuming the channels are not crowded with a large number of potential other remote devices, this process may advantageously reduce a large number of potential channels down to a manageable list of candidate channels that might have other remote devices with which the wireless communication device may connect.

For the energy-based scan, the measured energy during a short interval is above a threshold, it means, possibly, there is a wireless system activity in that channel and potentially another remote device such as an access point or a peer-to-peer device can be found. However, if the measured energy is below a threshold, then the chance of finding a good remote device is small.

Then, in the next scanning cycle, the channels with energy below the threshold level are skipped, and instead the wireless communication device may focus on channels that higher energy were detected. The idea is to avoid spending time scanning on all channels. Since the energy-based scan tunes to a channel for very short duration of time, e.g., 5 milliseconds, and the goal is to find a better remote device than the currently connected remote device, the wireless communication device may not request protection by the platform controller for the channel from internal interference.

The wireless communication device may not request protection because, in the presence of interference, energy will be detected on a channel, even if it is empty. If the channel is not empty, there is no impact for the additional energy (as the only target of energy-based scan is to verify that channel is not empty). If the channel is empty, the impact of the additional energy is that energy will be detected, and channel will be assumed not empty. As a result, scan shall be applied over this channel. Since only one channel (or in case of MLO, with a small likelihood two channels) will be impacted during energy-based scan cycle, the ROI (Return of Investment) of protecting the channel is low.

For the roaming, background, and user-triggered scans, the wireless communication device may already be associated with a remote device and may just be scanning to find a different remote with better connection metrics. For example, the wireless communication device may be associated with an access point and is in operational mode, i.e., the wireless communication device may transmit and receive user data. During these situations, the wireless communication device may continuously monitor the quality of connection and find other alternative APs. This is done through background scanning, or scanning can be triggered by the user, seeking to find a better connection.

In enterprise environments where several APs are available with the same SSID, then roaming can happen, which again means, the wireless communication device may scan to identify a new AP with which to associate. For background, roaming, and user-triggered scanning, the preference is to not switch to a new AP that does not have better connection parameters. Hence, the wireless communication device may not request protection by the platform controller for internal interference. The wireless communication device may not request protection because the target of these scans is to find a good a reliable alternative remote device, and if the alternative remote device is indeed reliable, then the protection is not needed. If the alternative remote device is not reliable, the wireless communication device may not select the alternative remote device anyway.

It is noted that for some embodiments, there is not a direct handshake with, e.g., a PMC of a platform controller. However, there is an efficient communication path between a firmware driver and Wi-Fi driver that extends the functionality through a Driver-to-Driver (D2D) path to exchange information such as scanning that can be done before, during and after a Wi-Fi connection is established. Since scanning/roaming is managed by Wi-Fi firmware, and not an operating system firmware driver, the scan information can be passed to a firmware driver through this D2D interface. In this case, one extra communication step exists compared to the communication with a PMC of a platform controller, which is back and forth communication through D2D. This can cause a time delay. The following proposes a solution to this time delay:

The Wi-Fi firmware may report the band that is scanned, which includes potential problematic channels. The mitigation will be to avoid those channels from that band. Therefore, in case all 3 bands are scanned, there may be a delay in the platform controller protecting a channel only when starting scan on a new band (instead of each new channel). While this mitigation is not optimal, for the infrequent and short emergency scans, this solution is acceptable.

Note also that in the 6 GHz channels, beacons may be transmitted at higher modulation and coding scheme (MCS), unlike 2.4 GHz and 5GHz bands, where beacons are always transmitted at the lowest basic rates. If beacons are sent at higher rates, then the wireless communications device may request protection from internal interference by a platform controller in the absence of a better access point.

FIG. 4B depicts another embodiment of a flowchart of a process 450 to implement interference logic circuitry such as the interference logic circuitry discussed in FIGs. 1-3. At element 455, interference logic circuitry of wireless communications device (e.g., the interference logic circuitry 1250 of the MLD 1250) may perform run-time measurements of interference on one or more channels. After performing the measurements, the interference logic circuitry of the wireless communications device may determine that the interference has a significant impact on wireless communications on the one or more channels (element 460). For instance, the interference logic circuitry of the wireless communications device may compare the interference pattern or metrics against one or more thresholds such as an amplitude threshold and a bandwidth threshold to determine if the wireless communications device can use a filter such as a notch filter to remove the interference or if the wireless communications device can otherwise filter out the interference.

If the interference meets or exceeds the one or more thresholds, the wireless communications device may communicate a protect request signal (via internal platform wiring) to a platform controller indicating a time frame for protection from internal interference (element 465). In such situations, the wireless communications device may request protection for a limited time frame such as a time frame of active communications or a time frame that excludes time frames during which the wireless communications device is in a PS mode.

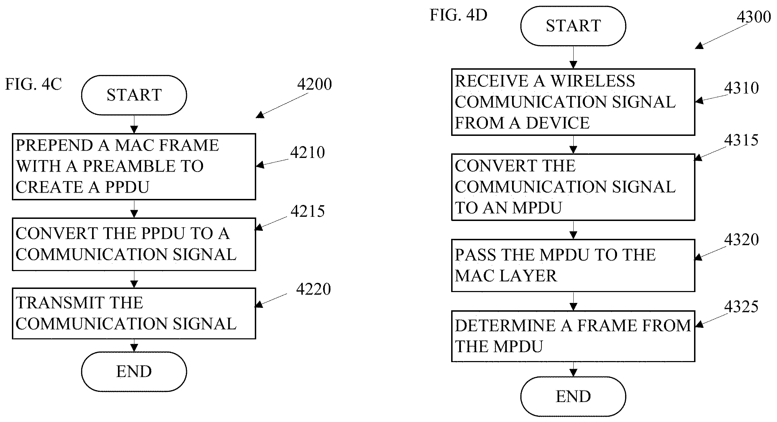

FIGs. 4C-D depict embodiments of flowcharts 4200 and 4300 to transmit, receive, and interpret communications with a frame. Referring to FIG. 4C, the flowchart 4200 may begin with receiving an MU frame from the wireless communications I/F 1216 of the AP MLD 1210 by the wireless communications I/Fs (such as wireless communications I/F 1246 of the MLD 1230, MLD 1290, MLD 1292, and MLD 1296 as shown in FIG. 1C. The MAC logic circuitry, such as the MAC logic circuitry 3091 in FIG. 3, of each MLD of MLD 1230, MLD 1290, MLD 1292, and MLD 1296 may operate in conjunction with interference logic circuitry 3093 to generate a management frame to transmit to the AP MLD 1210 as a reassociation request or response frame or a TID-to-Link mapping request or response frame and may pass the frame as an MAC protocol data unit (MPDU) to a PHY logic circuitry such as the PHY logic circuitry 3092 in FIG. 3 as a PSDU to include in a PHY frame. The PHY logic circuitry may also encode and transform the PSDU into OFDM symbols for transmission to the AP MLD 1210. The PHY logic circuitry may generate a preamble to prepend the PHY service data unit (PSDU) (the MPDU) to form a PHY protocol data unit (PPDU) for transmission (element 4210).

A physical layer device such as the transmitter 3006 in FIG. 3 or the wireless network interfaces 1222 and 1252 in FIG. 1C may convert the PPDU to a communication signal via a radio (element 4215). The transmitter may then transmit the communication signal via the antenna coupled with the radio (element 4220).

Referring to FIG. 4D, the flowchart 4300 begins with a receiver of a device such as the receiver 3004 in FIG. 3 receiving a communication signal via one or more antenna(s) such as an antenna element of antenna array 3018 (element 4310). The receiver may convert the communication signal into an MPDU in accordance with the process described in the preamble (element 4315). More specifically, the received signal is fed from the one or more antennas to a DBF such as the DBF 220. The DBF transforms the antenna signals into information signals. The output of the DBF is fed to OFDM such as the OFDM 3022 in FIG. 3. The OFDM extracts signal information from the plurality of subcarriers onto which information-bearing signals are modulated. Then, the demodulator such as the demodulator 3024 demodulates the signal information via, e.g., BPSK, 16-QAM (quadrature amplitude modulation), 64-QAM, 256-QAM, 1024-QAM, or 4096-QAM with a forward error correction (FEC) coding rate (1/2, 2/3, 3/4, or 5/6). And the decoder such as the decoder 3026 decodes the signal information from the demodulator via, e.g., BCC or LDPC, to extract the MPDU and pass or communicate the MPDU to MAC layer logic circuitry such as MAC logic circuitry 3091 (element 4320).

When received at the MAC layer circuitry, the MPDU may be a MAC Service Data Unit (MSDU). The MAC logic circuitry in conjunction with interference logic circuitry may determine frame field values from the MSDU (MPDU from PHY) (element 4325) such as the management frame fields in the management frame shown in FIGs. 2F-2I. For instance, the MAC logic circuitry may determine frame field values such as the type and subtype field values to determine that the MAC frame is the management frame and, more specifically, an association request frame, a reassociation request frame, an association response frame, a reassociation response frame, a TID-to-Link request frame, and/or a TID-to-Link response frame.

FIG. 5 shows a functional diagram of an exemplary communication station 500, in accordance with one or more example embodiments of the present disclosure. In one embodiment, FIG. 5 illustrates a functional block diagram of a communication station 500 that may be suitable for use as an AP MLD 1005 (FIG. 1A), a user device 1025 (FIG. 1A), a processing platform 1280 (FIG.1C), and/or a processing platform 1282 (FIG. 1C) in accordance with some embodiments. The communication station 500 may also be suitable for use as other user device(s) 1020 such as the user devices 1024 and/or 1026. The user devices 1024 and/or 1026 may include, e.g., a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 500 may include communications circuitry 502 and a transceiver 510 for transmitting and receiving signals to and from other communication stations using one or more antennas 501. The communications circuitry 502 may include circuitry that can operate the physical layer (PHY) communications and/or medium access control (MAC) communications for controlling access to the wireless medium, and/or any other communications layers for transmitting and receiving signals. The communication station 500 may also include processing circuitry 506 and memory 508 arranged to perform the operations described herein. In some embodiments, the communications circuitry 502 and the processing circuitry 506 may be configured to perform operations detailed in the above figures, diagrams, and flows.

The communications circuitry 502 and/or processing circuitry 506 may implement interference logic circuitry such as the interference logic circuitry described in conjunction with FIGs. 1-4. For example, the interference logic circuitry of the communications circuitry 502 may communicate via platform wiring with the processing circuitry 506 to communicate protect request signals and unprotect signals to a platform controller of the processing circuitry 506 to mitigate internal interference. The interference logic circuitry of the communications circuitry 502 may include run-time logic circuitry to measure, during run-time, interference detected on one or more communication channels that may include interference from platform devices internal to the communication station 500 based on predetermined interference data stored in the memory 508 at an address or within an address range dedicated for predetermined interference data. Based on a determination that the interference may include internal interference and a determination that an amplitude and bandwidth of the interference exceed one or more thresholds, the communications circuitry 502 may communicate a protect request signal to the processing circuitry 506 to protect one or more communication channels from the internal interference while the channels are active and/or while the communications circuitry is not in a PS mode.

In some embodiments, the interference logic circuitry of the processing circuitry may include offline measurement logic circuitry to measure interference from one or more platform devices internal to the communication station 500 to generate the predetermined interference data. For instance, the communication station 500 may be shielded to isolate the communication station 500 from external interference. While shielded, the offline measurement logic circuitry may cause the communications circuitry 502 to measure, one platform device at a time, interference on different communication channels from platform devices at two or more different workloads. The processing circuitry 506 may gather the interference data from each of the measurements to generate predetermined interference data and the predetermined interference data may associate interference measurement with each of the platform devices at the two or more different workloads.

In some embodiments, the interference logic circuitry of the processing circuitry may include prediction logic circuitry to predict, based on a channel indicated in a protect request signal from the communications circuitry 502 and the predetermined interference data, at least one platform device that may be the source of the interference.

In accordance with some embodiments, the communications circuitry 502 may be arranged to contend for a wireless medium and configure frames or packets for communicating over the wireless medium. The communications circuitry 502 may be arranged to transmit and receive signals. The communications circuitry 502 may also include circuitry for modulation/demodulation, upconversion/downconversion, filtering, amplification, etc. In some embodiments, the processing circuitry 506 of the communication station 500 may include one or more processors. In other embodiments, two or more antennas 501 may be coupled to the communications circuitry 502 arranged for sending and receiving signals. The memory 508 may store information for configuring the processing circuitry 506 to perform operations for configuring and transmitting message frames and performing the various operations described herein. The memory 508 may include any type of memory, including non-transitory memory, for storing information in a form readable by a machine (e.g., a computer). For example, the memory 508 may include a computer-readable storage device, read-only memory (ROM), random-access memory (RAM), magnetic disk storage media, optical storage media, flash-memory devices and other storage devices and media.

In some embodiments, the communication station 500 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 500 may include one or more antennas 501. The antennas 501 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 500 may include one or more of a keyboard, a display, a non-volatile memory port, multiple antennas, a graphics processor, an application processor, speakers, and other mobile device elements. The display may be an LCD screen including a touch screen.

Although the communication station 500 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 500 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 500 may include one or more processors and may be configured with instructions stored on a computer-readable storage device.

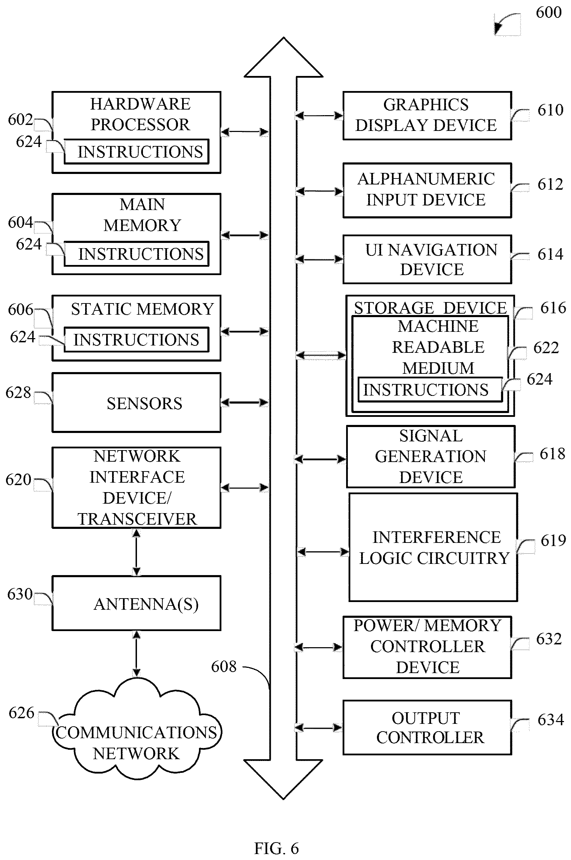

FIG. 6 illustrates a block diagram of an example of a machine 600 or system upon which any one or more of the techniques (e.g., methodologies) discussed herein may be performed. For instance, the machine may comprise an AP MLD such as the AP MLD 1005 and/or one of the user devices 1020 shown in FIG. 1A such as the user device 1025. In other embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a non-AP MLD or an AP MLD in network environments. The machine 600 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as link management. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the execution units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via one or more interlinks (e.g., buses or high-speed interconnects) 608. Note that the single set of interlinks 608 may be representative of the physical interlinks in some embodiments but is not representative of the physical interlinks 608 in other embodiments. For example, the main memory 604 may couple directly with the hardware processor 602 via high-speed interconnects or a main memory bus. The high-speed interconnects typically connect two devices, and the bus is generally designed to interconnect two or more devices and include an arbitration scheme to provide fair access to the bus by the two or more devices.

The machine 600 may further include a power / memory controller device 632, a graphics display device 610, an alphanumeric input device 612 (e.g., a keyboard), and a user interface (UI) navigation device 614 (e.g., a mouse). In an example, the graphics display device 610, alphanumeric input device 612, and UI navigation device 614 may be a touch screen display. The machine 600 may additionally include a storage device (i.e., drive unit) 616, a signal generation device 618 (e.g., a speaker), a interference logic circuitry 619, a network interface device/transceiver 620 coupled to antenna(s) 630, and one or more sensors 628, such as a global positioning system (GPS) sensor, a compass, an accelerometer, or other sensor. The machine 600 may include an output controller 634, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor such as the baseband processing circuitry 1218 and/or 1248 shown in FIG. 1C. The baseband processor may be configured to generate corresponding baseband signals. The baseband processor may further include physical layer (PHY) and medium access control layer (MAC) circuitry and may further interface with the hardware processor 602 for generation and processing of the baseband signals and for controlling operations of the main memory 604, the storage device 616, and/or the interference logic circuitry 619. The baseband processor may be provided on a single radio card, a single chip, or an integrated circuit (IC).

The storage device 616 may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within the static memory 606, or within the hardware processor 602 during execution thereof by the machine 600. In an example, one or any combination of the hardware processor 602, the main memory 604, the static memory 606, or the storage device 616 may constitute machine-readable media.

The power/ memory controller device 632 may access the interference logic circuitry 619 and communicate with the network interface device/ transceiver 620 to carry out or perform any of the operations and processes in relation to protection from internal interference on active communication channels of a wireless communications device (e.g., operations and processes of interference logic circuitry discussed in conjunction with FIGs. 1-5) described and shown herein. For instance, the

It is understood that the above are only a subset of what the interference logic circuitry 619 may be configured to perform and that other functions included throughout this disclosure may also be performed by the interference logic circuitry 619.

While the machine-readable medium 622 is illustrated as a single medium, the term "machine-readable medium" may include a single medium or multiple media (e.g., a centralized or distributed database, and/or associated caches and servers) configured to store the one or more instructions 624.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 600 and that cause the machine 600 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 624 may further be transmitted or received over a communications network 626 using a transmission medium via the network interface device/transceiver 620 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 620 may include one or more physical jacks (e.g., Ethernet, coaxial, or phone jacks) or one or more antennas to connect to the communications network 626. In an example, the network interface device/transceiver 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 600 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

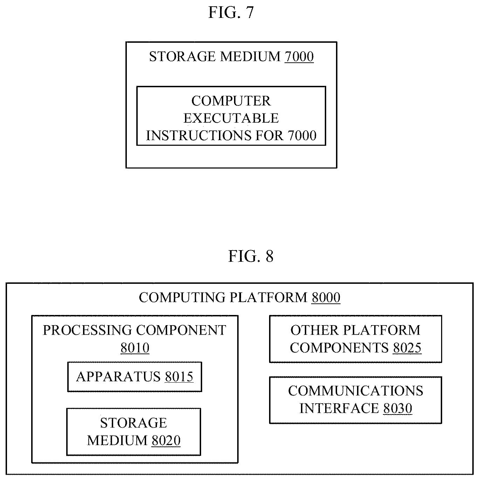

FIG. 7 illustrates an example of a storage medium 7000 to store association logic such as logic to implement the interference logic circuitry 619 shown in FIG. 6 and/or the other logic discussed herein to transition a non-AP MLD affiliated a non-collocated AP MLD from links with a first collocated AP MLD to links with a second collocated AP MLD. Storage medium 7000 may comprise an article of manufacture. In some examples, storage medium 7000 may include any non-transitory computer readable medium or machine-readable medium, such as an optical, magnetic or semiconductor storage. Storage medium 7000 may store diverse types of computer executable instructions, such as instructions to implement logic flows and/or techniques described herein. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like.

FIG. 8 illustrates an example computing platform 8000 such as the processing platforms 1280 and 1282 shown in FIG. 1C. In some examples, as shown in FIG. 8, computing platform 8000 may include a processing component 8010, other platform components or a communications interface 8030 such as the wireless network interfaces 1222 and 1252 shown in FIG. 1C. According to some examples, computing platform 8000 may be a computing device such as a server in a system such as a data center or server farm that supports a manager or controller for managing configurable computing resources as mentioned above. In some embodiments, the computing platform may comprise a mobile device such as a smart phone, a tablet, a notebook, a laptop, a headset, a power amplifier, a television, a speaker, a video/audio streaming device, a stereo, and/or the like.

According to some examples, processing component 8010 may execute processing operations or logic for apparatus 8015 described herein. Processing component 8010 may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits (ICs), application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements, which may reside in the storage medium 8020, may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. While discussions herein describe elements of embodiments as software elements and/or hardware elements, decisions to implement an embodiment using hardware elements and/or software elements may vary in accordance with any number of design considerations or factors, such as desired computational rate, power levels, heat tolerances, processing cycle budget, input data rates, output data rates, memory resources, data bus speeds and other design or performance constraints.

In some examples, other platform components 8025 may include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., universal serial bus (USB) memory), solid state drives (SSD) and any other type of storage media suitable for storing information.

In some examples, communications interface 8030 may include logic and/or features to support a communication interface. For these examples, communications interface 8030 may include one or more communication interfaces that operate according to various communication protocols or standards to communicate over direct or network communication links. Direct communications may occur via use of communication protocols or standards described in one or more industry standards (including progenies and variants) such as those associated with the Peripheral Component Interconnect (PCI) Express specification. Network communications may occur via use of communication protocols or standards such as those described in one or more Ethernet standards promulgated by the Institute of Electrical and Electronics Engineers (IEEE). For example, one such Ethernet standard may include IEEE 802.3-2012, Carrier sense Multiple access with Collision Detection (CSMA/CD) Access Method and Physical Layer Specifications, Published in December 2012 (hereinafter "IEEE 802.3"). Network communication may also occur according to one or more OpenFlow specifications such as the OpenFlow Hardware Abstraction API Specification. Network communications may also occur according to Infiniband Architecture Specification, Volume 1, Release 1.3, published in March 2015 ("the Infiniband Architecture specification").

Computing platform 8000 may be part of a computing device that may be, for example, a server, a server array or server farm, a web server, a network server, an Internet server, a workstation, a mini-computer, a main frame computer, a supercomputer, a network appliance, a web appliance, a distributed computing system, multiprocessor systems, processor-based systems, or combination thereof. Accordingly, various embodiments of the computing platform 8000 may include or exclude functions and/or specific configurations of the computing platform 8000 described herein.

The components and features of computing platform 8000 may comprise any combination of discrete circuitry, ASICs, logic gates and/or single chip architectures. Further, the features of computing platform 8000 may comprise microcontrollers, programmable logic arrays and/or microprocessors or any combination of the foregoing where suitably appropriate. Note that hardware, firmware and/or software elements may be collectively or individually referred to herein as "logic".

One or more aspects of at least one example may comprise representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that make the logic or processor.

Some examples may include an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner, or syntax, for instructing a machine, computing device or system to perform a certain function. The instructions may be implemented using any suitable high-level, low-level, object-oriented, visual, compiled and/or interpreted programming language.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

### ADVANTAGES OF SOME EMBODIMENTS

Several embodiments have one or more potentially advantages effects. For instance, interference logic circuitry, advantageously may advantageously reduce the amount of time during which other processes internal to a station or multi-link device associated with internal interference of wireless communications may reduce or change a frequency of operation to reduce the internal interference of wireless communication channels. For instance, interference logic circuitry may advantageously facilitate wireless communications while reducing the amount of time during which memory may operate at a clock frequency lower than a maximum clock frequency of the memory. Interference logic circuitry may advantageously facilitate wireless communications while reducing the amount of time during which a camera, a Bluetooth^{®} device, or other device may halt operations or operate at a clock frequency lower than a maximum clock frequency. Interference logic circuitry may advantageously determine a first time frame of a power save mode, wherein the power save mode is associated with wireless communications with a remote device; and communicate an unprotection signal to a platform controller coupled with the wireless communications device, the unprotection signal to indicate the first time frame during which protection from internal interference is not requested. Interference logic circuitry may advantageously communicate a protection request signal to request protection from internal interference during an emergency-based scan. Interference logic circuitry may, advantageously, communicate a protection request signal to request protection from internal interference after detection of an interference pattern associated with internal interference. Interference logic circuitry may, advantageously, detect the interference pattern and determine that the interference pattern is associated with internal interference based on a time period associated with the interference pattern, based on a pattern of the interference pattern, one or more channels associated with the interference, or a combination thereof. Interference logic circuitry may, advantageously, detect the interference pattern and determine that the interference pattern meets or exceeds a threshold level of interference on one or more channels associated with wireless communications with the remote device.

### EXAMPLES OF FURTHER EMBODIMENTS

The following examples pertain to further embodiments. Specifics in the examples may be used anywhere in one or more embodiments.

Example 1 is an apparatus comprising a platform device; an antenna; a radio coupled with the antenna for wireless communications; a platform controller; and logic circuitry coupled with the platform controller to communicate an unprotect signal to the platform controller, the unprotect signal to indicate a first time frame during which protection of the wireless communications from internal interference received at the antenna is not requested, the internal interference to comprise electromagnetic radiation emanating from the platform device based on operations by the platform device at a clock frequency, the protection to involve adjustment, by the platform controller of a clock frequency for the operations. In Example 2, the apparatus of Example 1, further comprising baseband processing circuitry coupled with the radio to wirelessly communicate with a remote device. In Example 3, the apparatus of Example 1, the first time frame comprising a second time frame during a power save mode, wherein the second time frame comprises performance by the radio of energy-based scanning of one or more channels. In Example 4, the apparatus of Example 1, the first time frame comprising a third time frame during a power save mode, wherein the third time frame comprises performance by the radio of a roaming scan, a background scan, or a user-triggered scan of one or more channels. In Example 5, the apparatus of Example 1, the logic circuitry to further communicate a protect request signal to request protection from the internal interference during an emergency-based scan. In Example 6, the apparatus of Example 5, the emergency-based scan to seek a new wireless communications connection after a loss of a current wireless communications connection with a remote device. In Example 7, the apparatus of Example 1, the logic circuitry to further communicate a protect request signal to request protection from the internal interference after detection of an interference pattern associated with the internal interference. In Example 8, the apparatus of Example 7, the logic circuitry to further detect the interference pattern and determine that the interference pattern is associated with the internal interference based on a time period associated with the interference pattern, based on a pattern of the interference pattern, based on one or more channels associated with the interference, or a combination thereof. In Example 9, the apparatus of Example 7, the logic circuitry to further detect the interference pattern and determine that the interference pattern meets or exceeds a threshold level of interference on one or more channels associated with the wireless communications with a remote device. In Example 10, the apparatus of Example 7, the logic circuitry to further perform offline measurements of interference received at the antenna from the platform device at one or more workloads on one or more wireless communication channels; determine predetermined interference data; and store the predetermined interference data at a memory address designated for the predetermined interference data.

Example 11 is a non-transitory computer-readable medium, comprising instructions, which when executed by a processor of a processing platform, cause the processor to perform operations to determine a first time frame associated with wireless communications with a remote device; and communicate an unprotect signal to a platform controller, the unprotect signal to indicate the first time frame during which protection of the wireless communications from internal interference received at an antenna is not requested, the internal interference to comprise electromagnetic radiation emanating from a platform device of the processing platform, based on operations by the platform device at a clock frequency, the protection to involve adjustment, by the platform controller of a clock frequency for the operations. In Example 12, the non-transitory computer-readable medium of Example 11, the first time frame comprising a second time frame during a power save mode, wherein the second time frame comprises performance by a radio of energy-based scanning of one or more channels. In Example 13, the non-transitory computer-readable medium of Example 11, the first time frame comprising a third time frame during a power save mode, wherein the third time frame comprises performance by a radio of a roaming scan, a background scan, or a user-triggered scan of one or more channels. In Example 14, the non-transitory computer-readable medium of Example 11, the operations to further communicate a protect request signal to request protection from the internal interference during an emergency-based scan. In Example 15, the non-transitory computer-readable medium of Example 14, the emergency-based scan to seek a new wireless communications connection after a loss of a current wireless communications connection with the remote device. In Example 16, the non-transitory computer-readable medium of Example 11, the operations to further communicate a protect request signal to request protection from internal interference after detection of an interference pattern associated with internal interference.

Example 17 is a method comprising determining a first time frame associated with wireless communications with a remote device; and communicating an unprotect signal to a platform controller, the unprotect signal to indicate the first time frame during which protection of the wireless communications from internal interference received at an antenna is not requested, the internal interference to comprise electromagnetic radiation emanating from a platform device of the processing platform, based on operations by the platform device at a clock frequency, the protection to involve adjustment, by the platform controller of a clock frequency for the operations. In Example 18, the method of Example 17, further comprising communicating a protect request signal to request protection from the internal interference during an emergency-based scan or after detection of an interference pattern associated with the internal interference. In Example 19, the method of Example 17, the first time frame comprising a second time frame during a power save mode, wherein the second time frame comprises energy-based scanning of one or more channels. In Example 20, the method of Example 17, the first time frame comprising a third time frame during a power save mode, wherein the third time frame comprises a roaming scan, a background scan, or a user-triggered scan of one or more channels.

Example 21 is a means for performing actions in any one or more of Examples 1 through 20.

## Claims

1. An apparatus comprising:
a platform device;
an antenna;
a radio coupled with the antenna for wireless communications;
a platform controller; and
logic circuitry coupled with the platform controller to communicate an unprotect signal to the platform controller, the unprotect signal to indicate a first time frame during which protection of the wireless communications from internal interference received at the antenna is not requested, the internal interference to comprise electromagnetic radiation emanating from the platform device based on operations by the platform device at a clock frequency, the protection to involve adjustment, by the platform controller of a clock frequency for the operations.

2. The apparatus of claim 1, further comprising baseband processing circuitry coupled with the radio to wirelessly communicate with a remote device.

3. The apparatus of one of the previous claims, the first time frame comprising a second time frame during a power save mode, wherein the second time frame comprises performance by the radio of energy-based scanning of one or more channels.

4. The apparatus of one of the previous claims, the first time frame comprising a third time frame during a power save mode, wherein the third time frame comprises performance by the radio of a roaming scan, a background scan, or a user-triggered scan of one or more channels.

5. The apparatus of one of the previous claims, the logic circuitry to further communicate a protect request signal to request protection from the internal interference during an emergency-based scan, the emergency-based scan to seek a new wireless communications connection after a loss of a current wireless communications connection with a remote device.

6. The apparatus of one of the previous claims, the logic circuitry to further communicate a protect request signal to request protection from the internal interference after detection of an interference pattern associated with the internal interference.

7. The apparatus of claim 6, the logic circuitry to further:
detect the interference pattern and
determine that the interference pattern is associated with the internal interference based on a time period associated with the interference pattern, based on a pattern of the interference pattern, based on one or more channels associated with the interference, or a combination thereof.

8. The apparatus of claim 6 or 7, the logic circuitry to further:
detect the interference pattern and
determine that the interference pattern meets or exceeds a threshold level of interference on one or more channels associated with the wireless communications with a remote device.

9. The apparatus of claim 6, 7 or 8, the logic circuitry to further:
perform offline measurements of interference received at the antenna from the platform device at one or more workloads on one or more wireless communication channels;
determine predetermined interference data; and
store the predetermined interference data at a memory address designated for the predetermined interference data.

10. A non-transitory computer-readable medium, comprising instructions, which when executed by a processor of a processing platform, cause the processor to perform operations to:
determine a first time frame associated with wireless communications with a remote device; and
communicate an unprotect signal to a platform controller, the unprotect signal to indicate the first time frame during which protection of the wireless communications from internal interference received at an antenna is not requested, the internal interference to comprise electromagnetic radiation emanating from a platform device of the processing platform, based on operations by the platform device at a clock frequency, the protection to involve adjustment, by the platform controller of a clock frequency for the operations.

11. The non-transitory computer-readable medium of claim 10, the first time frame comprising a second time frame during a power save mode, wherein the second time frame comprises performance by a radio of energy-based scanning of one or more channels.

12. The non-transitory computer-readable medium of claim 10 or 11, the first time frame comprising a third time frame during a power save mode, wherein the third time frame comprises performance by a radio of a roaming scan, a background scan, or a user-triggered scan of one or more channels.

13. The non-transitory computer-readable medium of claim 10, 11 or 12, the operations to further communicate a protect request signal to request protection from the internal interference during an emergency-based scan.

14. The non-transitory computer-readable medium of claim 13, the emergency-based scan to seek a new wireless communications connection after a loss of a current wireless communications connection with the remote device.

15. The non-transitory computer-readable medium of one of the claims 10-14, the operations to further communicate a protect request signal to request protection from internal interference after detection of an interference pattern associated with internal interference.
